# FASCICULE DE BREVET EUROPEEN

(11) **EP 2 826 683 B1**
(45) Date de publication et mention de la délivrance du brevet: **20.04.2016**
(21) Numéro de dépôt: 14176400.1
(22) Date de dépôt: 09.07.2014
(51) Int. Cl.: B60T 17/16, B61H 13/04

(54) **Système de freinage ferroviaire pour véhicule ferroviaire et procédé de freinage d'un véhicule ferroviaire comportant un tel système**
Schienenbremssystem für Schienenfahrzeug, und Bremsverfahren eines Schienenfahrzeugs, das ein solches System umfasst
Railway brake system for a railway vehicle and braking method of a railway vehicle comprising such a system

(30) Priorité: 17.07.2013 FR 1357025
(43) Date de publication de la demande: 21.01.2015
(73) Titulaire: Faiveley Transport Amiens, 80000 Amiens (FR)
(72) Inventeur: Boisseau, Gilles, 80090 Amiens (FR); Goncalves, Claudino, 80620 Ribeaucourt (FR)
(74) Mandataire: Santarelli

(56) Documents cités:
- EP-A1- 2 154 040
- EP-A1- 2 154 391
- US-A- 5 701 974

## Description

L'invention concerne le domaine du freinage des véhicules ferroviaires.

Elle concerne plus particulièrement les systèmes de freinage ferroviaires pour véhicule ferroviaire pourvus d'un frein de service et d'un frein de parking configurés pour agir sur une timonerie de freinage.

Elle concerne également les procédés de freinage de véhicules ferroviaires comportant de tels systèmes de freinage.

Les véhicules ferroviaires sont généralement équipés de cylindres de frein de service comportant un piston mobile sous l'effet d'un fluide sous pression, le déplacement de ce piston entraînant une action de freinage telle que le serrage d'un disque de frein entre deux garnitures, ou la pression directe d'une semelle contre une roue du véhicule.

Ces cylindres de frein comportent également généralement un actionneur de parking ou de secours qui est activé en cas de perte de pression du fluide sous pression et/ou en cas de vidange volontaire ou de fuite du système pneumatique. Cet actionneur, appelé aussi frein de parking, permet d'assurer le freinage grâce à la force d'un ressort se substituant à la force du fluide. Une fois ce frein de parking activé, le frein reste serré en permanence.

On connaît de la demande de brevet européen EP 2 154 040 un système de freinage ferroviaire pourvu d'un actionneur de frein de parking accouplé à un cylindre de frein de service ferroviaire. US 5701974A décrit un dispositif de contrôle de freinage pour des véhicules ferroviaires, dans lequel le frein de stationnement n'est pas disposé dans la chambre de pression de frein de service. Ce cylindre de frein comporte un corps et un piston mobile par rapport au corps pour agir sur la timonerie de freinage par l'intermédiaire d'une tige de poussée.

Le cylindre de frein comporte également une chambre de pression délimitée par le piston et par le corps et qui est raccordée par un conduit à une source d'agent de pression pneumatique pour mettre le piston dans une position de freinage de service.

Le frein de parking comporte quant à lui un corps distinct du corps du cylindre de frein. Le corps du frein de parking présente une ouverture en vis-à-vis du piston du cylindre de frein de service, laquelle ouverture reçoit à coulissement un manchon de poussée s'ajustant dans cette ouverture de manière étanche.

Le frein de parking comporte également un piston monté mobile dans un cylindre solidaire du corps et délimitant avec le corps une chambre de pression de frein de parking. Cette chambre de pression de frein de parking est raccordée à une autre source d'agent de pression pneumatique via un conduit. Le piston comporte en son centre un orifice traversé par le manchon de poussée.

Le frein de parking comporte en outre des ressorts qui sollicitent en permanence le piston de ce frein de parking vers une position dite basse où le frein de parking est considéré comme étant dans une configuration de travail.

Pour actionner le frein de parking lorsque le piston du cylindre de frein de service est en position de freinage de service, la chambre de pression du frein de parking (préalablement remplie avec l'agent de pression pneumatique) est vidangée et les ressorts du frein de parking agissent alors sur le piston du frein de parking, lequel entraîne le manchon jusqu'à ce que ce dernier vienne en appui contre le piston du cylindre de frein de service.

La chambre de pression du cylindre de frein de service peut alors être vidangée puisque le frein de parking est actionné.

La force appliquée par le frein de parking sur le piston de frein de service est directement fonction de la force développée par les ressorts. Cette force est fonction bien entendu de la raideur et de l'allongement de ces ressorts.

Avec ce système de freinage, l'effort appliqué par le piston du cylindre de frein de service lorsque le frein de parking est actionné et le cylindre de frein de service est vidangé sur la timonerie de freinage est souvent inférieur à l'effort appliqué par ce même piston lorsqu'il est en position de freinage de service.

L'invention concerne un système de freinage pour véhicule ferroviaire, présentant des performances améliorées par rapport aux systèmes de freinage de l'art antérieur susmentionnés, tout en étant simple, commode et économique.

L'invention a ainsi pour objet, sous un premier aspect, un système de freinage ferroviaire pour véhicule ferroviaire à freins à au moins une garniture ou à au moins une semelle, comportant :
- un corps ;
- une timonerie de freinage configurée pour agir sur au moins un dit frein à au moins une garniture ou à au moins une semelle ;
- un frein de service comportant un piston de freinage mobile par rapport audit corps pour agir sur ladite timonerie de freinage et délimitant avec ledit corps une chambre de pression de frein de service configurée pour être alimentée par une première source d'agent de pression pneumatique pour mettre ledit piston de freinage dans une position de freinage de service ; et
- un frein de parking configuré pour agir sur ledit piston de freinage dudit frein de service et admettant une configuration de travail et une configuration de repos ;
ledit système de freinage ferroviaire étant caractérisé en ce que ledit frein de parking comporte :
- un dispositif de blocage mobile par rapport audit corps pour agir sur ledit piston de freinage et admettant une première position et une seconde position dans laquelle ledit dispositif de blocage est configuré pour immobiliser ledit piston de freinage en position de freinage de service, ledit frein de parking étant alors en configuration de travail ;
- un dispositif de commande mobile par rapport audit corps, délimitant avec ledit corps une chambre de pression de frein de parking configurée pour être alimentée par une deuxième source d'agent de pression pneumatique, et admettant une position stable dans laquelle ledit dispositif de commande est configuré pour maintenir ledit dispositif de blocage dans sa seconde position ;
avec ledit système de freinage ferroviaire qui est configuré pour que, lorsque ledit dispositif de commande est dans sa position stable, ladite chambre de pression de frein de service est alimentée par ladite deuxième source d'agent de pression pneumatique, dont la pression est supérieure à celle de ladite première source d'agent de pression pneumatique, afin d'appliquer, lorsque ledit frein de parking est en configuration de travail, un effort de freinage plus important que l'effort de freinage appliqué lorsque ledit piston de freinage est dans sa position de freinage de service et que ledit frein de parking est dans sa configuration de repos.

Dans le système de freinage selon l'invention, le piston de freinage est immobilisé en position de freinage de service par le frein de parking et en particulier par son dispositif de blocage. Cela signifie que le piston de freinage peut être immobilisé dans n'importe quelle position, laquelle position est liée à la course que ce piston a parcourue et cette course dépend de l'effort appliqué lors de la phase de freinage de service.

On entend par le terme immobiliser le fait que l'effort appliqué par le piston de freinage sur la timonerie de freinage dans la configuration de travail du frein de parking ne diminue pas, ou presque pas.

On admet tout de même une certaine perte liée au recul du piston de freinage, en particulier au léger déplacement du piston par rapport au dispositif de blocage, au moment où la chambre de pression de frein de service est vidangée. Cette perte est maîtrisée et se définit par une très légère diminution de l'effort appliqué qui est due notamment aux tolérances de fabrication à la fois du dispositif de blocage et du piston de freinage. Cette diminution de l'effort appliqué sur la timonerie de freinage est ici appelée pertes au recul. Une valeur acceptable de ces pertes au recul est au maximum de l'ordre de 10% de l'effort appliqué par le frein de service à l'instant où le frein de parking est actionné pour être en configuration de travail.

Grâce à l'invention et en particulier à la configuration du piston de freinage et du frein de parking, on s'affranchit notamment des ressorts des systèmes de freinage connus décrits ci-dessus qui permettent d'appliquer l'effort de frein de parking sur la timonerie de freinage par l'intermédiaire du piston du cylindre de frein de service. Ainsi, pour un même effort appliqué sur la timonerie de freinage lorsque le frein de parking est en configuration de travail, le système de freinage selon l'invention est plus compact que les systèmes de freinage de l'art antérieur susmentionnés, et également plus léger.

On notera que la timonerie de freinage présente avantageusement des bras déformables dont l'élasticité peut se substituer à celle des ressorts des systèmes de freinage connus décrits ci-dessus.

On notera que la configuration du frein de parking est choisie de telle sorte que la force appliquée directement par le dispositif de blocage pour immobiliser le piston de freinage n'est pas supérieure à la force appliquée par les ressorts sur le piston des systèmes de freinage de l'art antérieur susmentionnés ; alors que l'effort appliqué sur la timonerie de freinage lorsque le frein de parking du système selon l'invention est en configuration de travail est au moins égal voire supérieur à celui procuré par les systèmes de freinage de l'art antérieur susmentionnés.

Grâce à sa configuration, le système de freinage selon l'invention permet en outre d'alimenter momentanément la chambre de pression de frein de service avec la deuxième source d'agent de pression pneumatique afin d'augmenter l'effort de freinage appliqué sur la timonerie de freinage par le piston de frein de service.

On notera que la deuxième source d'agent de pression pneumatique alimente initialement la chambre de pression de frein de parking.

Par conséquent, l'effort de freinage appliqué sur la timonerie de freinage lorsque le frein de parking est dans sa configuration de travail en est d'autant augmenté.

Le système selon l'invention permet donc d'obtenir des efforts de freinage de frein de service et de frein de parking supérieurs à ceux obtenus avec les systèmes de freinage de l'art antérieur susmentionnés, de manière simple, commode et économique.

Selon des caractéristiques préférées, simples, commodes et économiques du système selon l'invention :
- ledit système comporte au moins un dispositif de distribution pneumatique configuré pour être alimenté par ladite deuxième source d'agent de pression pneumatique et pour être connecté à ladite chambre de pression de frein de parking afin de mettre ledit frein de parking respectivement dans sa configuration de repos lorsqu'il est alimenté par ladite deuxième source d'agent de pression pneumatique et dans sa configuration de travail lorsqu'il n'est pas alimenté par ladite deuxième source d'agent de pression pneumatique ;
- ledit au moins un dispositif de distribution pneumatique est configuré pour être connecté à ladite chambre de pression de frein de service afin d'alimenter ledit frein de service avec ladite deuxième source d'agent de pression pneumatique ;
- ledit système comporte une valve de dérivation configurée pour être connectée à ladite première source d'agent de pression pneumatique, à ladite deuxième source d'agent de pression pneumatique et à ladite chambre de pression de frein de service pour son alimentation ;
- ledit dispositif de distribution pneumatique est en communication fluidique avec ladite valve de dérivation pour l'alimentation de ladite chambre de pression de frein de service ;
- ledit dispositif de distribution pneumatique est pourvu d'une valve de seuil configurée pour contrôler et commander le passage d'un premier état dudit dispositif de distribution pneumatique à un second état dudit dispositif de distribution pneumatique ;
- ledit dispositif de distribution pneumatique est formé par un distributeur pourvu de quatre orifices et d'un tiroir à deux positions ;
- ledit tiroir à deux positions présente, dans une première position, une première entrée d'alimentation configurée pour être connectée à ladite deuxième source d'agent de pression pneumatique, une première sortie de frein de parking en communication fluidique avec ladite première entrée d'alimentation et configurée pour être connectée à ladite chambre de pression de frein de parking, une première sortie de frein de service configurée pour être connectée à ladite chambre de pression de frein de service et une première sortie d'échappement en communication fluidique avec ladite première sortie de frein de service et débouchant à l'atmosphère ; et dans une deuxième position, une deuxième entrée d'alimentation configurée pour être connectée à ladite deuxième source d'agent de pression pneumatique, une deuxième sortie de frein de service en communication fluidique avec ladite deuxième entrée d'alimentation et configurée pour être connectée à ladite chambre de pression de frein de service, une deuxième sortie de frein de parking configurée pour être connectée à ladite chambre de pression de frein de parking et une deuxième sortie d'échappement en communication fluidique avec ladite deuxième sortie de frein de parking et débouchant à l'atmosphère ;
- ledit système comporte une valve de dérivation pourvue d'un premier orifice configuré pour être connecté à ladite première source d'agent de pression pneumatique, d'un deuxième orifice configuré pour être connecté, dans ladite première position dudit tiroir, à ladite première sortie de frein de service, et dans ladite deuxième position dudit tiroir, à ladite deuxième sortie de frein de service, et d'un troisième orifice configuré pour être connecté à ladite chambre de pression de frein de service ; avec ladite valve de dérivation qui comporte un clapet mobile configuré pour admettre une première position dans laquelle ledit premier orifice est en communication fluidique avec ledit troisième orifice et une deuxième position dans laquelle ledit deuxième orifice est en communication fluidique avec ledit troisième orifice ;
- ledit dispositif de distribution pneumatique est formé par un premier distributeur et un second distributeur pourvus chacun de trois orifices et d'un tiroir à deux positions ;
- ledit tiroir dudit premier distributeur présente, dans une première position, une première entrée d'alimentation configurée pour être connectée à ladite deuxième source d'agent de pression pneumatique, une première sortie de frein de parking en communication fluidique avec ladite première entrée d'alimentation et configurée pour être connectée à ladite chambre de pression de frein de parking, et une première sortie bloquée de frein de service configurée pour être connectée à ladite chambre de pression de frein de service et pour bloquer le passage de l'air ; et dans une deuxième position, une deuxième entrée d'alimentation configurée pour être connectée à ladite deuxième source d'agent de pression pneumatique, une première sortie de frein de service en communication fluidique avec ladite deuxième entrée d'alimentation et configurée pour être connectée à ladite chambre de pression de frein de service, et une première sortie bloquée de frein de parking configurée pour être connectée à ladite chambre de pression de frein de parking et pour bloquer le passage de l'air ; tandis que ledit tiroir dudit second distributeur présente, dans une première position, une deuxième sortie de frein de service configurée pour être connectée à ladite chambre de pression de frein de service, une première sortie d'échappement en communication fluidique avec ladite deuxième sortie de frein de service et débouchant à l'atmosphère, et une deuxième sortie bloquée de frein de parking configurée pour être connectée à ladite chambre de pression de frein de parking et pour bloquer le passage de l'air ; et dans une deuxième position, une deuxième sortie de frein de parking configurée pour être connectée à ladite chambre de pression de frein de parking, une deuxième sortie d'échappement en communication fluidique avec ladite deuxième sortie de frein de parking et débouchant à l'atmosphère, et une deuxième sortie bloquée de frein de service configurée pour être connectée à ladite chambre de pression de frein de service et pour bloquer le passage de l'air ;

- ledit système comporte une valve de dérivation pourvue d'un premier orifice configuré pour être connecté à ladite première source d'agent de pression pneumatique, d'un deuxième orifice configuré pour être connecté, dans ladite première position desdits tiroirs, à la fois à la première sortie bloquée de frein de service et à la deuxième sortie de frein de service, et dans ladite deuxième position desdits tiroirs, à la fois à la première sortie de frein de service et à la deuxième sortie bloquée de frein de service, et d'un troisième orifice configuré pour être connecté à ladite chambre de pression de frein de service ; avec ladite valve de dérivation qui comporte un clapet mobile configuré pour admettre une première position dans laquelle ledit premier orifice est en communication fluidique avec ledit troisième orifice et une deuxième position dans laquelle ledit deuxième orifice est en communication fluidique avec ledit troisième orifice ; et/ou
- ledit piston de freinage est disposé dans ledit corps et présente deux côtés, respectivement un premier côté configuré pour agir sur ladite timonerie de freinage et un second côté opposé audit premier côté et tourné vers la dite chambre de pression de frein de service, ainsi qu'une tige de piston raccordée audit second côté dudit piston de freinage et disposée dans ladite chambre de pression de frein de service ; ledit frein de parking est disposé dans ledit corps, ledit dispositif de blocage est formé par un doigt de blocage et ledit dispositif de commande est formé par un piston de maintien mobile par rapport audit corps et délimitant avec ledit corps une chambre de pression de frein de parking ainsi qu'un élément ressort disposé dans ledit corps et configuré pour agir sur ledit piston de maintien ; avec ledit piston de maintien qui est configuré pour maintenir ledit doigt de blocage dans sa première position lorsque ladite chambre de pression de frein de parking est alimentée et sous pression, première position dans laquelle ledit doigt de blocage est à distance de ladite tige de piston ; et avec ledit élément ressort qui est configuré pour maintenir ledit doigt de blocage dans sa seconde position lorsque ladite chambre de pression de frein de parking est vidangée, deuxième position dans laquelle ledit doigt de blocage immobilise ladite tige de piston.

L'invention a aussi pour objet, sous un deuxième aspect, un procédé de freinage d'un véhicule ferroviaire, comportant un système de freinage ferroviaire tel que décrit ci-dessus, comportant :
- l'étape d'alimenter la chambre de pression de frein de parking dudit système avec une deuxième source d'agent de pression pneumatique pour déplacer le dispositif de commande dudit système pour qu'il agisse sur le dispositif de blocage dudit système jusqu'à ce que ce dernier laisse libre le piston de freinage dudit système, le frein de parking dudit système étant alors en configuration de repos ;
- l'étape d'alimenter la chambre de pression de frein de service dudit système avec une première source d'agent de pression pneumatique de sorte à mettre ledit piston de freinage en position de freinage de service ;
- l'étape de commander la vidange de la chambre de pression de frein de parking pour déplacer ledit dispositif de blocage jusqu'à ce que ce dernier vienne immobiliser ledit piston de freinage dans sa position de freinage de service, ledit frein de parking étant alors en configuration de travail ;

- l'étape d'alimenter ladite chambre de pression de frein de service avec ladite deuxième source d'agent de pression pneumatique de sorte à appliquer un effort supplémentaire sur la timonerie de freinage dudit système par l'intermédiaire dudit piston de freinage ; et
- l'étape de commander la vidange de ladite chambre de pression de frein de service.

Le procédé selon l'invention est particulièrement simple et commode à mettre en oeuvre.

Selon des caractéristiques préférées, simples et économiques du procédé selon l'invention, ladite étape de commander la vidange de ladite chambre de pression de frein de parking est déclenchée suite à la détection d'un seuil de pression prédéterminé et/ou ladite étape de commander la vidange de ladite chambre de pression de frein de service se fait en laissant fuir ladite chambre de pression de frein de service.

On va maintenant poursuivre l'exposé de l'invention par la description d'exemples de réalisation, donnée ci-après à titre illustratif et non limitatif, en référence aux dessins annexés sur lesquels :
- les figures 1 à 5 illustrent schématiquement le fonctionnement d'un système de freinage ferroviaire conforme à l'invention, lequel système est pourvu d'un distributeur pneumatique et est connecté à différentes sources d'agent de pression pneumatique du véhicule, ce système étant respectivement dans différentes configurations ; et
- les figures 6 et 7 représentent schématiquement deux variantes de réalisation du distributeur visible sur les figures 1 à 4.

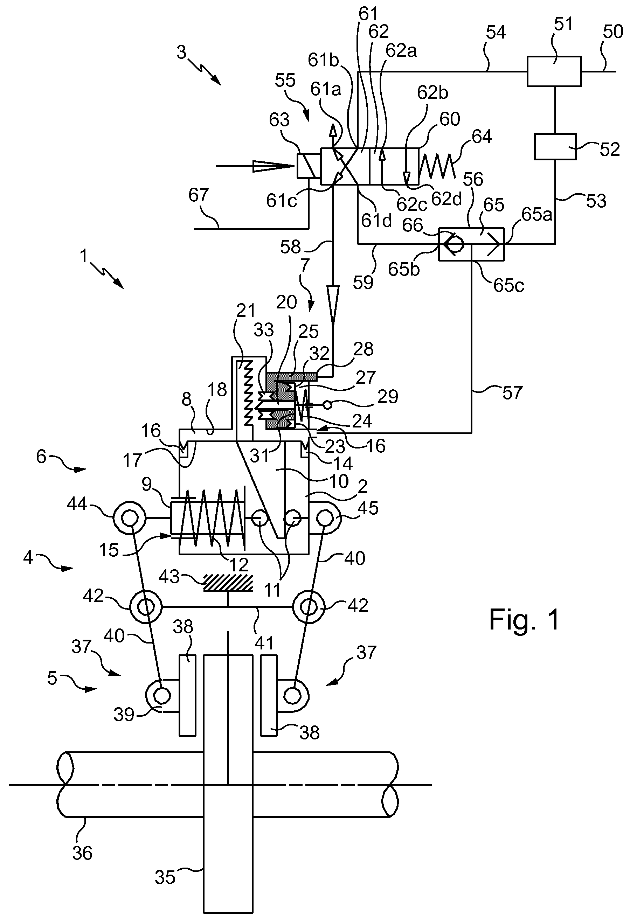

La figure 1 représente schématiquement un système de freinage ferroviaire 1 pour un véhicule ferroviaire à frein à garnitures ou à semelles.

Le système de freinage ferroviaire 1 comporte un corps 2 formant ici un cylindre à la fois de frein de service 6 et de frein de parking 7, un réseau de cheminement de conduites pneumatiques 3 connecté au corps 2, une timonerie de freinage 4 reliée mécaniquement au corps 2 ainsi qu'un frein 5 à garnitures sur lequel la timonerie de freinage 4 est configurée pour agir.

Le corps 2 présente ici la forme d'une enveloppe globalement fermée.

Le frein de service 6 comporte un piston de frein de service 8 mobile par rapport au corps 2 selon une première direction axiale, une tige de poussée 9 mobile également par rapport au corps 2 suivant une deuxième direction axiale perpendiculaire à la première direction axiale.

Le piston de freinage 8 délimite avec le corps 2 une chambre de pression de frein de service 13.

Le piston de freinage 8 présente deux côtés respectivement un premier côté 17 configuré pour agir sur la timonerie de freinage 4 par l'intermédiaire de la tige de poussée 9 et un second côté 18 opposé au premier côté 17 et tourné vers la chambre de pression de frein de service 13.

Le frein de service 6 comporte en outre une tige crantée 21 fixée sur le deuxième côté 18 du piston de freinage 8. Cette tige crantée 21 s'étend longitudinalement selon la première direction axiale.

Le piston de freinage 8 est configuré pour se déplacer dans le corps 2 tout en maintenant la chambre de pression de frein de service 13 relativement étanche grâce à une membrane 14 disposée entre ce piston de freinage 8 et des bords intérieurs du corps 2.

Le frein de service 6 comporte en outre une pièce de coin 10 fixée sur le premier côté 17 du piston de freinage 8.

Cette pièce de coin 10 présente une section triangulaire et est configurée pour coopérer avec un jeu de butées à roulements 11, dont l'une des butées à roulements est reliée au corps 2 tandis que l'autre des butées à roulements est reliée à la tige de poussée 9.

Cette tige de poussé 9 est pourvue d'un régleur d'usure configuré pour compenser l'usure des garnitures du frein 5 afin d'éviter qu'un jeu trop important (consécutif à l'usure des garnitures) ne réduise l'effort de freinage.

Le frein de service 6 comporte en outre un ressort 12 ici disposé autour de la tige de poussée 9, entre la butée à roulements qui est reliée à cette dernière et le bord intérieur du corps 2. Ce ressort 12 est configuré pour rappeler la butée qui est reliée à la tige de poussée 9 contre la pièce de coin 10.

Le frein de service 6 comporte en outre un premier orifice 15 ménagé dans le corps 2 et configuré pour autoriser le déplacement de la tige de poussée 9 au travers de ce premier orifice 15.

Le frein de service 6 comporte en outre un deuxième orifice 16 ménagé dans le corps 2 et débouchant dans la chambre de pression de frein de service 13.

Cette chambre de pression de frein de service 13 est raccordée par une conduite de frein de service 57 connectée au niveau de ce deuxième orifice 16 à une source de fluide sous pression tel que, par exemple, un circuit pneumatique.

Le corps 2 comporte une cavité 27 accolée à la chambre de pression de frein de service 13 et dans laquelle est disposé le frein de parking 7.

Le frein de parking 7 comporte un dispositif de blocage formé ici par un doigt de blocage 20 mobile par rapport au corps 2 et s'étendant suivant la deuxième direction axiale.

Le frein de parking 7 comporte en outre un piston de maintien 23 mobile par rapport au corps 2 et délimite avec ce dernier une chambre de pression de frein de parking 25.

Ce piston de maintien 23 présente deux côtés, respectivement un premier côté 31 sur lequel est attaché le doigt de blocage 20 et un second côté 32 opposé au premier côté 31 et tourné vers la chambre de pression de frein de parking 25.

Le frein de parking 7 comporte en outre un élément ressort 24 disposé entre le corps 2 et le deuxième côté 32 du piston de maintien 23. Cet élément ressort 24 est configuré pour agir sur ce piston de maintien 23 et par conséquent sur le doigt de blocage 20.

On notera que le piston de maintien 23 et que l'élément ressort 24 forment un dispositif de commande mobile du frein de parking 7.

Le piston de maintien 23 est configuré pour se déplacer dans le corps 2 tout en maintenant la chambre de pression de frein de parking 25 relativement étanche grâce à une membrane (non représentée) disposée entre ce piston de maintien 23 et des bords intérieurs du corps 2.

Le frein de parking 7 comporte un troisième orifice (non représenté) ménagé dans le corps 2 et débouchant à la fois dans la chambre de pression de frein de parking 25 et dans la chambre de pression de frein de service 13, lequel troisième orifice est configuré pour autoriser le déplacement du doigt de blocage 20 à travers ce troisième orifice.

On notera que l'étanchéité relative entre la chambre de pression de frein de parking 25 et la chambre de pression de frein de service 13 est assurée par la présence d'un joint d'étanchéité 33 disposé à l'interface entre ce troisième orifice et le doigt de blocage 20.

Le frein de parking 7 comporte en outre un quatrième orifice 28 ménagé dans le corps 2 et débouchant dans la chambre de pression de frein de parking 25.

On notera d'ailleurs que cette chambre de pression de frein de parking 25 est raccordée par une conduite de frein de parking 58 connectée au niveau de ce quatrième orifice 28 à une source de fluide sous pression, tel que par exemple un circuit pneumatique.

Le frein de parking 7 comporte en outre une pièce de déverrouillage 29 rattachée sur le deuxième côté 32 du piston de maintien 23 et débouchant à l'extérieur du corps 2 au travers d'un cinquième orifice (non représenté) ménagé dans ce corps 2 et débouchant dans la cavité 27 ; de sorte que cette pièce de déverrouillage 29 est accessible pour être manipulée depuis l'extérieur du corps 2.

Le frein de service 6 est disposé dans le corps 2 et est configuré pour agir sur le frein 5 par l'intermédiaire de la timonerie de freinage 4.

Ce frein 5 comporte un disque de frein 35 (ici vu de dessus) monté par exemple sur un essieu 36 de véhicule ferroviaire, ou directement sur la roue à freiner.

Ce frein 5 comporte en outre deux patins 37 pourvus chacun d'une garniture 38 configurées pour être appliquée au contact du disque 35 pour réduire sa vitesse de rotation et par conséquent celle de la roue à freiner, ainsi que d'un oeillet de fixation 39 ménagé à l'opposé de la surface de la garniture 38 configurée pour venir s'appliquer sur le disque de frein 35.

La timonerie de freinage 4 comporte deux leviers déformables 40 pourvus chacun d'un bras supérieur et d'un bras inférieur qui sont solidaires.

Chaque bras des leviers 40 est articulé sur un connecteur central 41 par l'intermédiaire de deux pivots 42.

Le bras inférieur de chaque levier déformable 40 est relié à l'un des patins 37 par l'intermédiaire de son oeillet de fixation 39.

Le bras supérieur de chaque levier déformable 40 est quant à lui relié à une articulation respective 44, 45.

La timonerie de freinage 4 reçoit le corps 2 entre les bras supérieurs des leviers déformables 40, au niveau des articulations 45 et 46.

Le corps 2 est monté à rotation sur l'articulation 44 qui est solidaire d'une extrémité de la tige de poussée 9 tandis qu'il est monté fixe sur l'articulation 45, laquelle est directement solidaire de ce corps 2.

La timonerie de freinage 4 comporte également une patte de fixation 43 solidaire du connecteur central 41 pour le montage de cette timonerie de freinage 4 sur le véhicule ferroviaire ; afin que les patins de freinage 37 soient situés de part et d'autre du disque de frein 35 (ou de la roue du véhicule ferroviaire).

On notera que le rapprochement des articulations 44 et 45 permet d'écarter les patins 37 l'un de l'autre et qu'à l'inverse, l'éloignement de ces articulations 44 et 45 permet de serrer les patins 37 sur le disque de frein 35 (ou sur la roue du véhicule ferroviaire).

Le réseau de cheminement de conduites pneumatiques 3 comporte ici un circuit pneumatique principal formée d'une conduite principale 50 qui est configurée pour cheminer le long du véhicule ferroviaire.

Ce réseau 3 comporte en outre un réservoir auxiliaire 51 connecté à la conduite principale 50.

On notera qu'un tel réservoir auxiliaire 51 est généralement présent sur chaque bogie du véhicule ferroviaire.

La conduite principale 50 est configurée pour acheminer un fluide sous une première pression prédéterminée, par exemple sensiblement égale à environ 5,5bars. Le réservoir auxiliaire 51 comporte donc un fluide à une telle première pression prédéterminée.

Le réseau 3 comporte, en sortie du réservoir auxiliaire 51 (la conduite principale 50 étant connectée en entrée de ce réservoir auxiliaire 51), deux circuits pneumatiques distincts appelés aussi première source d'agent de pression pneumatique et deuxième source d'agent de pression pneumatique, chacune étant configurée pour alimenter le frein de service 6 et/ou le frein de parking 7.

La première source d'agent de pression pneumatique est formée par un régulateur de pression 52 (ici un détendeur) disposé en sortie du réservoir auxiliaire 51 et configuré pour limiter la pression du fluide circulant dans cette première source d'agent de pression pneumatique à une seconde pression déterminée, par exemple sensiblement égale à environ 3,8bars.

Cette première source d'agent de pression pneumatique comporte en outre une conduite de frein principale 53 connectée au limiteur de pression 52 et configurée pour acheminer du fluide sous la deuxième pression prédéterminée, ainsi que la conduite de frein de service 57 mentionnée plus haut, laquelle est connectée au deuxième orifice 16 du frein de service 6 pour alimenter la chambre de pression de frein de service 13.

Le réseau 3 comporte en outre une valve de dérivation 56 interconnectée entre la conduite de frein principale 53 et la conduite de frein de service 57.

La deuxième source d'agent de pression pneumatique est formée quant à elle d'une conduite de frein secondaire 54 connectée directement en sortie du réservoir auxiliaire 51, d'une conduite de frein de parking 58 connectée au quatrième orifice 28 du frein de parking 7 qui débouche dans la chambre de pression de frein de parking 25 pour alimenter pneumatiquement cette dernière.

Cette deuxième source d'agent de pression pneumatique comporte également une conduite intermédiaire 59 ainsi que la conduite de frein de service 57, avec la valve de dérivation 56 qui est interconnectée entre cette conduite intermédiaire 59 et cette conduite de frein de service 57.

Le réseau 3 comporte également un distributeur 55 ici à quatre orifices et deux positions, et monostable, lequel est interposé entre la conduite de frein secondaire 54, la conduite de frein de parking 58 et la conduite intermédiaire 59, avec chacune de ses conduites 54, 58 et 59 qui est connectée à ce distributeur 55.

Ce distributeur 55 comporte un tiroir 60 mobile et un actionneur 63 qui est configuré pour déplacer ce tiroir 60.

Cet actionneur 63 est configuré pour recevoir un signal de commande 67, par exemple pneumatique.

Ce distributeur 55 comporte également un ressort de rappel 64 configuré pour déplacer le tiroir 60 d'une première position vers une deuxième position.

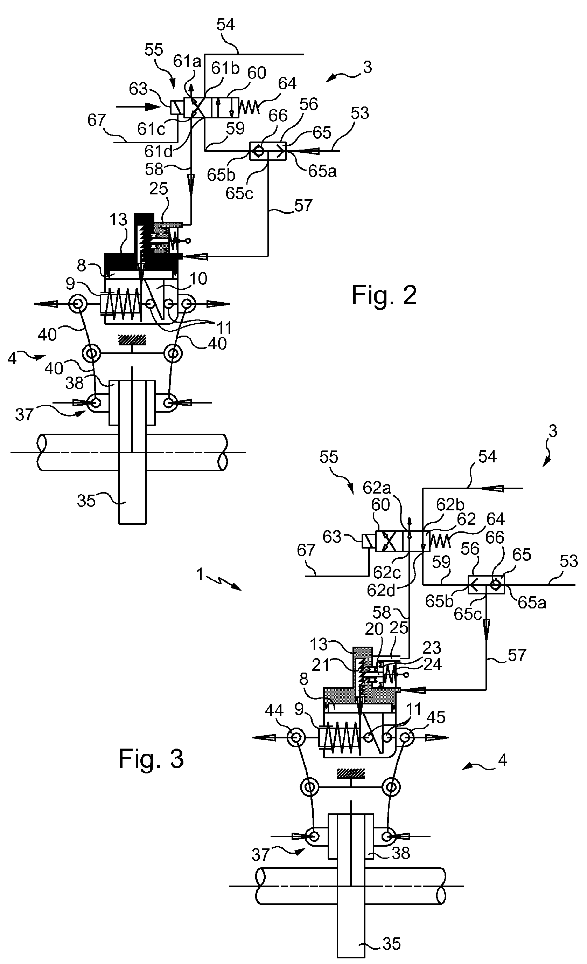

On notera que sur les figures 1 et 2, le distributeur 55 est représenté dans sa première position, laquelle première position n'est pas sa position par défaut.

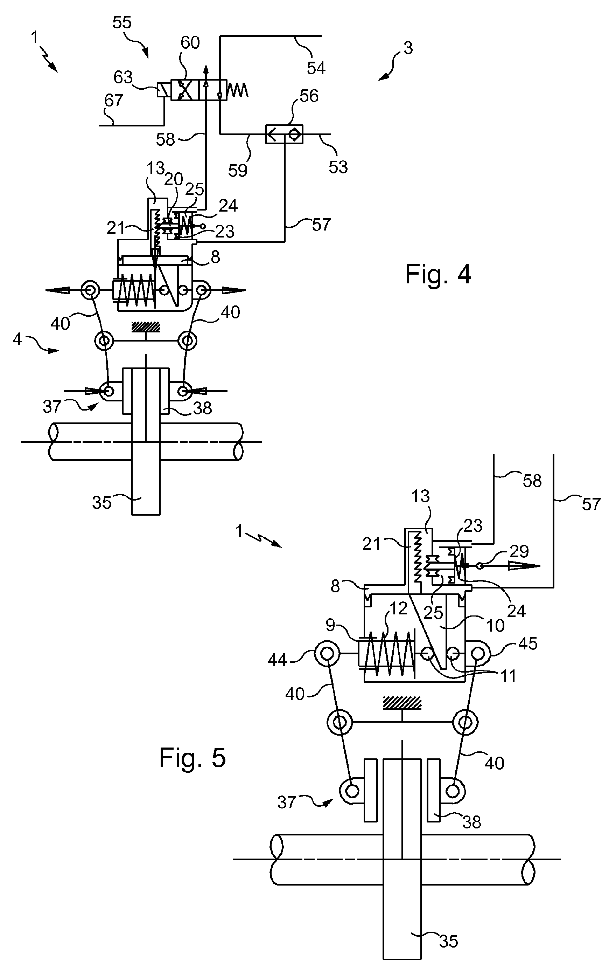

Autrement dit, l'actionneur 63 du distributeur 55 est configuré pour recevoir un signal pneumatique non nul ou au moins suffisant pour déplacer le tiroir 60 entre sa deuxième position (position par défaut appelée aussi « normalement fermée » illustrée sur les figures 3 et 4) et sa première position (illustrée sur les figures 1 et 2).

On notera que le tiroir 60 comporte une première chambre 61 pourvue de quatre entrées/sorties 61 a-d et d'une deuxième chambre 62 pourvue également de quatre entrées/sorties 62a-d.

Dans chacune des première et deuxième positions du tiroir 60, la conduite de frein secondaire 54, la conduite de frein de parking 58 ainsi que la conduite intermédiaire 59 sont chacune reliées à une des quatre entrées/sorties 61 a-d et 62a-d.

La valve 56 comporte quant à elle une chambre 65, un premier orifice 65a auquel est connectée la conduite de frein principale 53, un deuxième orifice 65b auquel est connectée la conduite intermédiaire 59 ainsi qu'un troisième orifice 65c auquel est connectée la conduite de frein de service 57.

Chacun de ces premier, deuxième et troisième orifices 65a-c débouche dans la chambre 65 de la valve 56.

La valve 56 comporte en outre un clapet 66 mobile dans la chambre 65 et configuré pour mettre en communication fluidique soit les premier et troisième orifices 65a et 65c, soit les deuxième et troisième orifices 65b et 65c.

On va maintenant décrire le fonctionnement du système de freinage ferroviaire 1 en référence aux figures 1 à 5, qui illustrent schématiquement différentes configurations de ce système 1.

Sur la figure 1, le système de freinage ferroviaire 1 est dans une configuration de réarmement.

Dans cette configuration de réarmement, la chambre de pression de frein de service 13 n'est pas alimentée (elle est vidangée) de sorte que le piston de freinage 8 est dans une position de repos, dans laquelle il n'applique pas d'effort de freinage sur la tige de poussée 9.

Par conséquent, les articulations 44 et 45 de la timonerie de freinage 4 sont à une distance l'une de l'autre qui permet de maintenir à distance les patins 37 du disque de frein 35.

La chambre de pression de frein de parking 25 est quant à elle alimentée par la conduite de frein de parking 58, laquelle est connectée via le distributeur 55 à la conduite secondaire de frein 54, elle-même étant directement connectée au réservoir auxiliaire 51.

La chambre de pression de frein de parking 25 est donc sous pression de sorte que le piston de maintien 23 se trouve dans une première position dans laquelle l'élément ressort 24 est comprimé et le doigt de blocage 20 dans une première position à distance de la tige crantée 21 du frein de service 6.

Dans cette configuration de réarmement du système 1, le frein de parking 7 est dans une configuration réarmée tandis que le frein de service 6 est dans une configuration de repos.

En outre, le tiroir 60 du distributeur 55 se trouve dans sa première position qui indique que l'actionneur 63 a reçu un signal de commande 67 (non nul) et donc que le tiroir 60 a été déplacé de sa deuxième position (position par défaut) à sa première position à l'encontre du ressort de rappel 64, lequel est comprimé.

Dans cette première position du tiroir 60, la première chambre 61 présente une première entrée d'alimentation 61 b connectée au réservoir auxiliaire 51 par l'intermédiaire de la conduite de frein secondaire 54, une première sortie de frein de parking 61 c en communication fluidique avec la première entrée d'alimentation 61 b et connectée à la chambre de pression de frein de parking 25 par l'intermédiaire de la conduite de frein de parking 58.

En outre, la première chambre 61 présente une première sortie de frein de service 61 d connectée au deuxième orifice 65b de la valve de dérivation 56 et une première sortie d'échappement 61a en communication fluidique avec la première sortie de frein de service 61 d et débouchant à l'atmosphère.

Aucune des entrée et sortie de la deuxième chambre 62 du tiroir 60 n'est connectée.

On notera que le frein de parking 7 est dimensionné et configuré de sorte que la pression de réarment du frein de parking 7 est relativement faible, par exemple de l'ordre de 2bar à 6bars.

Sur la figure 2, le système de freinage ferroviaire 1 est représenté dans une configuration d'application du frein de service 6.

Dans cette configuration d'application du frein de service 6, la chambre de pression de frein de service 13 est alimentée par la conduite de frein de service 57 et par la conduite de frein principale 53, au travers de la valve de dérivation 56.

La chambre de pression de frein de service 13 est donc sous pression et le piston de freinage 8 a été déplacé dans la première direction axiale de sa première position vers une deuxième position dans laquelle la pièce de coin 10 a écarté le jeu de butées à roulements 11, déplaçant ainsi la tige de poussée 9 et l'articulation 44.

Par conséquent, les articulations 44 et 45 s'éloignent l'une de l'autre et provoquent le rapprochement des patins 37 et donc l'application des garnitures 38 contre le disque de frein 35.

On notera que dans la configuration d'application du frein de service 6 du système 1, les leviers 40 sont déformés (élastiquement).

On notera également que dans cette configuration illustrée sur la figure 2, la chambre de pression de frein de parking 25 est toujours sous pression comme mentionné en référence à la figure 1.

Dans cette configuration d'application du frein de service 6 du système 1, le frein de parking 7 est toujours dans sa configuration réarmée tandis que le frein de service 6 est dans une configuration de travail.

La position du tiroir 60 des distributeurs 55 est donc similaire à celle illustrée sur la figure 1.

La différence réside dans le fait que la conduite de frein principale 53 est sous pression, que le fluide qui y circule entre dans la chambre 65 de la valve de dérivation 56 par le premier orifice 65a, obligeant le clapet mobile 66 à venir sensiblement boucher le deuxième orifice 65b ; et ainsi à autoriser la communication fluidique entre le premier orifice 65a et le troisième orifice 65c pour alimenter la conduite de frein de service 57 et par conséquent la chambre de pression de frein de service 13.

On notera que le clapet mobile 66 interdit la communication fluidique entre le deuxième orifice 65b et le troisième orifice 65c.

On notera également que dans la configuration illustrée sur la figure 2, la première pression prédéterminée du fluide injecté dans la chambre de pression de frein de service 13 déplace le piston de freinage 8 d'une course prédéterminée afin d'agir sur la timonerie de freinage 4 avec une première force prédéterminée et par conséquent appliquer un premier effort prédéterminé sur le disque de frein 35.

Sur la figure 3, le système de freinage ferroviaire 2 est représenté dans une configuration de verrouillage dans laquelle le piston de freinage 8 du frein de service 6 est immobilisé dans sa deuxième position illustrée sur la figure 2.

On notera que la timonerie de freinage 4 est ici dans la même position que celle illustrée sur la figure 2.

La chambre de pression de frein de service 13 est quant à elle toujours sous pression tandis que la chambre de pression de parking 25 est vidangée.

La vidange de la chambre de pression de parking 25 libère l'élément ressort 24, qui déplace le piston de maintien 23 de sa première position vers une deuxième position dite position stable et ainsi déplace le doigt de blocage 20 de sa première position à une deuxième position dans laquelle il vient immobiliser la tige crantée 21 par engrainement de l'extrémité distale de ce doigt de blocage 20 avec des crans ménagés sur la tige crantée 21.

Pour effectuer la vidange de la chambre de pression de frein de parking 25, l'actionneur 63 du distributeur 55 a reçu un signal de commande 67 différent, ici par exemple nul, de sorte que le tiroir 60 est passé de sa première position à sa deuxième position sous l'action du ressort de rappel 64.

Dans cette deuxième position du tiroir 60, la deuxième chambre 62 de ce tiroir 60 présente une deuxième sortie de frein de parking 62c connectée à la chambre de pression de frein de parking 25 par l'intermédiaire de la conduite de frein de parking 58 et une deuxième sortie d'échappement 62a en communication fluidique avec la deuxième sortie de frein de parking 62c et débouchant à l'atmosphère.

Sur cette même figure 3, le système de freinage ferroviaire 2 est également illustré dans une configuration dite de suralimentation de frein de service 6.

En effet, la deuxième chambre 62 du tiroir 60 présente une deuxième entrée d'alimentation 62b connectée à la conduite de frein secondaire 54, elle-même connectée directement au réservoir auxiliaire 51, et une deuxième sortie de frein de service 62d en communication fluidique avec la deuxième entrée d'alimentation 62b et connectée à la conduite intermédiaire 59.

Le fluide sous la deuxième pression prédéterminée acheminée par les conduites de frein secondaire 54 et intermédiaire 59 entre dans la chambre 65 de la vanne de dérivation 56 par le deuxième orifice 65b et oblige le clapet 66 à se déplacer pour venir sensiblement boucher le premier orifice 65a de cette vanne 56 et ainsi mettre en communication fluidique le deuxième orifice 65b et le troisième orifice 65c de cette vanne de dérivation 56.

Par conséquent, le fluide sous la deuxième pression prédéterminée, supérieure à la première pression prédéterminée, est acheminé par la conduite de frein de service 57 jusque dans la chambre de pression de frein de service 13, autorisant ainsi à suralimenter cette dernière.

L'alimentation de cette chambre de pression de frein de service 13 par le fluide sous la deuxième pression prédéterminée permet de déplacer le piston de freinage 8 pour écarter encore le jeu de butée à roulements 11 et ainsi éloigner encore les articulations 44 et 45 de la timonerie de freinage 4.

Cet éloignement représentatif d'une deuxième force prédéterminée supérieure à la première force prédéterminée appliquée par le piston de freinage 8 engendre un deuxième effort prédéterminé supérieur au premier effort prédéterminé sur le disque de frein 35 par l'intermédiaire des patins 37.

On notera que la tige crantée 21 et le doigt de blocage 20 sont configurés pour autoriser un tel déplacement du piston de freinage 8 alors que le doigt de blocage 20 immobilise cette tige crantée 21.

Par exemple, la tige crantée 21 présente une denture prédéterminée et l'extrémité distale du doigt de blocage 20 présente également une denture prédéterminée complémentaire de la denture prédéterminée de la tige crantée 21.

On notera que le doigt de blocage 20 autorise le déplacement de la tige crantée 21 uniquement dans un sens de déplacement du piston de freinage 8 pour serrer encore plus le disque de frein 35 et immobilise à nouveau la tige crantée 21 dès que cette dernière est stoppée, dans la troisième position du piston de freinage 8.

Dans ces configurations de verrouillage et de suralimentation du frein de service 6, le frein de parking 7 et le frein de service 6 sont chacun dans une configuration de travail.

Sur la figure 4, le système de freinage ferroviaire 2 est représenté dans une configuration de vidange du frein de service 6.

La vidange de la chambre de pression de frein de service 13 s'effectue par l'intermédiaire des fuites dans le réseau 3. Autrement dit, ni la chambre de pression de service 13, ni la conduite de frein de service 57 ni la conduite intermédiaire 59, ni la conduite de frein secondaire 54 et ni la conduite de frein principale 53 ne sont directement mises à l'atmosphère.

On notera que le fluide sous pression présent dans la chambre de pression de frein de service 13 s'échappe de cette dernière notamment depuis la conduite de frein principale 53.

On notera que dans cette configuration de vidange du frein de service 7 du système 1, le distributeur 55 a son tiroir 60 dans sa deuxième position.

On notera également que, grâce au frein de parking 6 et en particulier à l'ensemble doigt de blocage 20 - piston de maintien 23 - élément ressort 24, en combinaison avec la tige crantée 21 fixée au piston de freinage 8 du frein de service 6, ce piston de freinage 8 reste dans sa troisième position où il agit sur la timonerie de freinage 4 pour appliquer le deuxième effort prédéterminé sur le disque de frein 35 par l'intermédiaire des patins 37, malgré la vidange de la chambre de pression de frein de service 13.

Dans cette configuration de vidange du frein de service 6, le frein de parking 7 est dans une configuration de travail tandis que le frein de service 6 est bloqué dans sa configuration de travail, malgré la vidange de la chambre de pression de frein de service 13.

Sur la figure 5, le système de freinage ferroviaire 1 est représenté dans une configuration de déverrouillage.

Dans cette configuration de déverrouillage, un effort a été appliqué sur la pièce de déverrouillage 29 du frein de parking 6 de sorte à tirer cette pièce déverrouillage 29 vers l'extérieur du corps 2.

Le déplacement de cette pièce de déverrouillage 29 entraine le piston de maintien 23 et par conséquent le doigt de blocage 20 à l'encontre de l'élément ressort 24 qui se trouve ainsi comprimé.

Le fait que le doigt de blocage 20 atteigne sa deuxième position, ce dernier ne coopère plus avec la tige crantée 21, qui est ainsi libre.

Par conséquent, le ressort 12 disposé autour de la tige de poussée 9 et entre le bord intérieur du corps 2 et la butée à roulements fixée sur la tige de poussée 9 retrouve sa position initiale.

Ce ressort 12 entraine donc la butée à roulements 11 disposée entre la tige de poussée 9 et la pièce de coin 10 selon la deuxième direction axiale, entrainant ainsi le retour du piston de freinage 8 selon la première direction axiale, jusqu'à sa position de repos.

Les articulations 44 et 45 de la timonerie de freinage sont rapprochées l'une de l'autre de sorte que les leviers déformables 40 retrouvent leurs positions initiales illustrées sur la figure 1 et les patins 37 se retrouvent à distance du disque de frein 35, lequel est ainsi libre en rotation (le disque de frein 35 n'est plus freiné).

Dans cette configuration de déverrouillage, le frein de parking 7 est dans une configuration de déverrouillage tandis que le frein de service 6 est dans une configuration de repos.

Dans la configuration de déverrouillage du système 1, on notera que le distributeur 55 est par exemple dans la même configuration que celle illustrée sur la figure 4, avec les chambres de frein de service 13 et de parking 25 qui sont vidangées.

On notera que le frein de parking 6 est configuré de sorte que l'effort à appliquer pour le déverrouillage, par l'intermédiaire de la pièce de déverrouillage 29, soit relativement faible pour être effectué manuellement par un utilisateur tel que le conducteur du véhicule ferroviaire. Par exemple cet effort est de l'ordre d'environ 10 à 50 daN.

Dans une variante non illustrée, la suralimentation de la chambre de pression de frein de service 13 (illustrée sur la figure 3) peut être effectuée avant l'application du frein de parking 7 et par conséquent avant l'immobilisation du piston de freinage 8 du frein de service 6. Dans ce cas, la tige crantée 21 ainsi que le doigt de blocage 20 n'ont pas besoin d'être configurés pour autoriser un déplacement unidirectionnel de la tige crantée 21 malgré l'immobilisation de cette dernière par le doigt de blocage 20.

Plus généralement, l'ordre dans lequel les opérations de verrouillage par l'application du frein de parking 7 et de suralimentation du frein de service 6 sont réalisées est indifférent ; et ces opérations peuvent également effectuées en même temps.

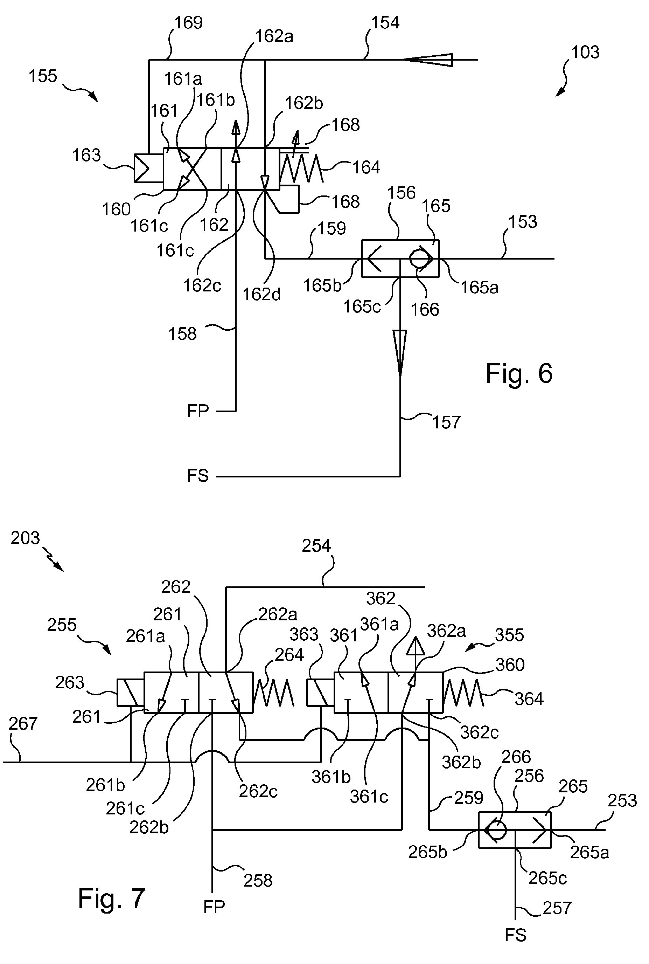

La figure 6 illustre une variante de réalisation du réseau de cheminement de conduites pneumatiques illustré sur les figures 1 à 4.

D'une manière générale on a employé pour les éléments similaires les mêmes références mais additionnées du nombre 100.

Le réseau de cheminement de conduites pneumatiques 103 comporte ici un distributeur 155 et une valve de dérivation 156.

Le distributeur 155 comporte un tiroir 160 muni d'une première chambre 161 et d'une deuxième chambre 162, d'un actionneur 163 et d'un ressort de rappel 164.

Les première et deuxième 161 et 162 chambres présentent chacune quatre orifices référencés respectivement 161 a, 161b, 161 c et 161 d et 162a, 162b, 162c et 162d ; et le distributeur 155 est configuré pour que le tiroir 160 présente deux positions.

Le distributeur 155 comporte en outre une valve de seuil 168 configurée pour contrôler et commander le passage du tiroir 160 du distributeur 155 d'un premier état de ce dernier un second état.

Ici, le premier état correspond à la première opposition du tiroir 160 (non illustrée) et le deuxième état correspond à la deuxième position du tiroir 160, illustrée sur la figure 6.

La valve de seuil 168 est ainsi configurée pour faire passer le tiroir 160 de sa première position à sa deuxième position lorsque la valeur de pression du fluide sous pression dans la chambre de pression du frein de parking est inférieure à une valeur de seuil de pression prédéterminé.

Le déclenchement de la valve de seuil 168 permet la vidange de la chambre de pression du frein de parking et ainsi le passage de ce dernier en configuration de travail pour bloquer le piston de freinage du frein de service.

On notera que l'on détecte ici une chute de pression dans la chambre de pression du frein de parking car on considère qu'une telle chute de pression est significative d'une chute de pression dans la chambre de pression du frein de service. En effet, s'il y a des fuites au niveau de la chambre de pression du frein de parking, il y en a aussi dans la chambre de pression du frein de service.

L'utilisation d'une telle valve de seuil 168 est particulièrement avantageuse car, après l'application du frein de service (comme décrit en référence à la figure 2) des fuites pourraient lentement vidanger la chambre de pression de frein de service et la chambre de pression du frein de parking, sans que le frein de parking ne soit appliqué.

Ainsi, la valve de seuil 168 permet d'éviter cette situation puisque le basculement du tiroir 160 permet l'application du frein de parking dès lors que la pression du fluide dans la chambre de pression de frein de parking est inférieure à la valeur de seuil de pression prédéterminé (et donc dès lors que la pression du fluide dans la chambre de pression de frein de service a baissé significativement).

Le tiroir 160 à deux positions présente, dans sa première position non illustrée, une première entrée d'alimentation 161b configurée pour être connectée à la conduite de frein secondaire 154, elle-même reliée au réservoir auxiliaire, une première sortie de frein de parking 161 c en communication fluidique avec la première entrée d'alimentation 161b et configurée pour être connectée à la chambre de pression du frein de parking noté FP sur la figure, une première sortie de frein de service 161 d configurée pour être connectée à la chambre de pression du frein de service noté FS sur la figure et une première sortie d'échappement 161 a en communication fluidique avec la première sortie de frein de service 161 d et débouchant à l'atmosphère.

Le tiroir 160 à deux positions présente, dans sa deuxième position illustrée, une deuxième entrée d'alimentation 162b connectée à la conduite de frein secondaire 154, elle-même reliée au réservoir auxiliaire, une deuxième sortie de frein de service 162d en communication fluidique avec la deuxième entrée d'alimentation 162b et connectée à la chambre de pression du frein de service FS, une deuxième sortie de frein de parking 162c connectée à la chambre de pression du frein de parking FP et une deuxième sortie d'échappement 162a en communication fluidique avec la deuxième sortie de frein de parking 162c et débouchant à l'atmosphère.

En outre, la valve de dérivation 156 est pourvue d'un premier orifice 165a connecté à la conduite de frein principale 153), d'un deuxième orifice 165b configuré pour être connecté, dans la première position du tiroir 160, à la première sortie de frein de service 161 d, et dans la deuxième position du tiroir 160, à la deuxième sortie de frein de service 162d, et d'un troisième orifice 165c connecté à la chambre de pression de frein de service FS ; avec la valve de dérivation 156 qui comporte un clapet mobile 166 configuré pour admettre une première position dans laquelle le premier orifice 165a est en communication fluidique avec le troisième orifice 165c et une deuxième position dans laquelle le deuxième orifice 165b est en communication fluidique avec le troisième orifice 165c.

On observera que l'actionneur 163 est quant à lui connecté à la conduite de frein secondaire 154 par l'intermédiaire d'une conduite de commande 169, pour le déplacement du tiroir 160 au déclenchement de la valve de seuil 168.

La figure 7 illustre une autre variante de réalisation du réseau de cheminement de conduites pneumatiques illustré sur les figures 1 à 4.

D'une manière générale on a employé pour les éléments similaires mais additionnés des nombres 200 et 300.

Le réseau de cheminement de conduites pneumatiques 203 comporte une valve de dérivation 256 et deux distributeurs 255 et 355 du type à trois orifices et deux positions et qui sont similaires.

Ces deux distributeurs 255 et 355 sont configurés pour être commandés simultanément par un signal de commande 267 connecté respectivement aux actionneurs 263 et 363, pour les faire passer de leur deuxième position illustrée sur la figure 7 à leur première position (non illustrée).

Ces deux distributeurs 255 et 355 comportent en outre un ressort 264, 364 pour ramener les tiroirs 260, 360 dans leur deuxième position (position initiale dite « normalement fermée »).

Les tiroirs 260 et 360 sont pourvus chacun d'une première chambre 261, 361 et d'une deuxième chambre 262, 362.

Chacune de ces chambres est pourvues de trois orifices 261 a, 261 b et 261 c, 262a, 262b et 262c, 361 a, 361 b et 361 c, 362a, 362b et 362c.

On notera que le tiroir 260 du premier distributeur 255 présente, dans sa première position non illustrée, une première entrée d'alimentation 261 a configurée pour être connectée à la conduite de frein secondaire 254, une première sortie de frein de parking 261 b en communication fluidique avec la première entrée d'alimentation 261 a et configurée pour être connectée à la chambre de pression du frein de parking noté FP sur la figure, et une première sortie bloquée de frein de service 261 c configurée pour être connectée à la chambre de pression du frein de service noté FS sur la figure et pour bloquer le passage de l'air ; tandis que le tiroir 360 du second distributeur 355 présente, dans sa première position non illustrée, une deuxième sortie de frein de service 361 c configurée pour être connectée à la chambre de pression du frein de service FS, une première sortie d'échappement 361a en communication fluidique avec la deuxième sortie de frein de service 361a et débouchant à l'atmosphère, et une deuxième sortie bloquée de frein de parking 361 b configurée pour être connectée à la chambre de pression de frein de parking FP pour bloquer le passage de l'air.

Le tiroir 260 présente en outre, dans sa deuxième position illustrée, une deuxième entrée d'alimentation 262a connectée à la conduite de frein secondaire 254, une première sortie de frein de service 262c en communication fluidique avec la deuxième entrée d'alimentation 262a et connectée à la chambre de pression du frein de service FS, et une première sortie bloquée de frein de parking 262c connectée à la chambre de pression du frein de parking FP pour bloquer le passage de l'air ; tandis que le tiroir 360 du second distributeur 355 présente, dans sa deuxième position illustrée, une deuxième sortie de frein de parking 362b connectée à la chambre de pression du frein de parking FP, une deuxième sortie d'échappement 362a en communication fluidique avec la deuxième sortie de frein de parking 361 b et débouchant à l'atmosphère, et une deuxième sortie bloquée de frein de service 361 c connectée à la chambre de pression du frein de service FS pour bloquer le passage de l'air.

En outre, la valve de dérivation 256 est pourvue d'un premier orifice 265a connecté à la conduite de frein principale 253, d'un deuxième orifice 265b configuré pour être connecté, dans la première position des tiroirs 260 et 360, à la fois à la première sortie bloquée de frein de service 261 c et à la deuxième sortie de frein de service 361 c, et dans la deuxième position des tiroirs 260 et 360, à la fois à la première sortie de frein de service 262c et à la deuxième sortie bloquée de frein de service 362c, et d'un troisième orifice 265c connecté à la chambre de pression du frein de service FS ; avec la valve de dérivation 256 qui comporte un clapet mobile 266 configuré pour admettre une première position dans laquelle le premier orifice 265a est en communication fluidique avec le troisième orifice 265c et une deuxième position dans laquelle le deuxième orifice 265b est en communication fluidique avec le troisième orifice 265c.

Dans des variantes non illustrées :
- des distributeurs 55, 155, 255 et 355 ne sont pas commandés pneumatiquement mais plutôt électriquement ou de manière hydraulique ;
- les distributeurs 255 et 355 sont en outre pourvus chacun d'une valve de seuil comme celle décrite en référence à la figue 6 ;
- dans la configuration de réarmement du système de freinage ferroviaire, l'opération de réarmer est effectuée de manière électrique ou mécanique ou encore hydraulique plutôt que pneumatique ;
- dans la configuration de déverrouillage du système de freinage ferroviaire, la pièce de déverrouillage est maintenue dans une position de déverrouillage du frein de parking par un verrou pneumatique ou électrique ou encore mécanique ;
- dans la configuration de déverrouillage du système de freinage ferroviaire, la commande de déverrouillage est effectuée de manière manuelle par l'utilisation d'au moins un câble, ou de manière pneumatique ou électrique ou encore hydraulique ;
- la configuration de déverrouillage du système de freinage ferroviaire est obtenue en alimentant la chambre de pression de frein de parking, comme pour la configuration de réarmement plutôt que par l'actionnement d'une pièce de déverrouillage ;
- la chambre de pression de frein de service peut être vidangée volontairement plutôt que par les fuites du système ;
- dans la configuration de verrouillage, l'actionnement du dispositif de blocage peut être effectué par un actionneur électrique plutôt que par la mise sous pression d'une chambre de pression alimentée via un distributeur ;
- le système de freinage ferroviaire est dépourvu d'un régulateur entre le réservoir auxiliaire et la chambre de pression de frein de service et/ou est dépourvu d'un réservoir auxiliaire et/ou les première et deuxième sources d'agent de pression pneumatique sont totalement distinctes plutôt que de venir d'une même conduite principale ;
- le système de freinage ferroviaire comporte un frein de service dépourvu de pièce de coin attachée au piston de freinage, de sorte que ce piston agit directement sur la tige de poussée, lequel agit sur les leviers déformables ; et dans ce cas, le piston de freinage ensemble avec sa tige crantée et la tige de poussée sont mobiles dans la deuxième direction axiale tandis que le frein de parking est configuré de sorte que le doigt de blocage et le piston de maintien sont mobiles dans la première direction axiale ;
- le système de freinage ferroviaire présente une timonerie de freinage différente de celle illustrée sur les figures, en particulier, la timonerie de freinage comporte une semelle configurée pour agir directement sur une roue du véhicule ferroviaire, cette semelle étant directement articulée par une articulation du type pivot fixée à la tige de poussée, un levier rigide fixé au corps du système ainsi qu'un levier déformable fixé à la fois au levier rigide et à l'articulation sur la semelle ; et/ou
- le système de freinage ferroviaire comporte une timonerie de freinage configurée pour agir sur un frein à semelles comme décrit ci-dessus et est pourvu d'un frein de service avec ou sans pièce de coin attachée au piston de freinage.

## Revendications

1. Système de freinage ferroviaire pour véhicule ferroviaire à freins à au moins une garniture ou à au moins une semelle (5), comportant :
- un corps (2) ;
- une timonerie de freinage (4) configurée pour agir sur au moins un dit frein à au moins une garniture ou à au moins une semelle (5) ;
- un frein de service (6) comportant un piston de freinage (8) mobile par rapport audit corps (2) pour agir sur ladite timonerie de freinage (4) et délimitant avec ledit corps (2) une chambre de pression de frein de service (13) configurée pour être alimentée par une première source d'agent de pression pneumatique (50, 51, 53, 57 ; 153 ; 253) pour mettre ledit piston de freinage (8) dans une position de freinage de service ; et
- un frein de parking (7) configuré pour agir sur ledit piston de freinage (8) dudit frein de service (6) et admettant une configuration de travail et une configuration de repos ;
ledit système de freinage ferroviaire (1) étant **caractérisé en ce que** ledit frein de parking (7) comporte :
- un dispositif de blocage (20) mobile par rapport audit corps (2) pour agir sur ledit piston de freinage (8) et admettant une première position et une seconde position dans laquelle ledit dispositif de blocage (20) est configuré pour immobiliser ledit piston de freinage (8) en position de freinage de service, ledit frein de parking (7) étant alors en configuration de travail ;
- un dispositif de commande (23, 24) mobile par rapport audit corps (2), délimitant avec ledit corps (2) une chambre de pression de frein de parking (25) configurée pour être alimentée par une deuxième source d'agent de pression pneumatique (50, 51, 54, 58 ; 154 ; 254), et admettant une position stable dans laquelle ledit dispositif de commande (23, 24) est configuré pour maintenir ledit dispositif de blocage dans sa seconde position ;
avec ledit système de freinage ferroviaire (1) qui est configuré pour que, lorsque ledit dispositif de commande (23, 24) est dans sa position stable, ladite chambre de pression de frein de service (13) est alimentée par ladite deuxième source d'agent de pression pneumatique (50, 51, 54, 58 ; 154 ; 254), dont la pression est supérieure à celle de ladite première source d'agent de pression pneumatique (50, 51, 53, 57 ; 153 ; 253), afin d'appliquer, lorsque ledit frein de parking (7) est en configuration de travail, un effort de freinage plus important que l'effort de freinage appliqué lorsque ledit piston de freinage (8) est dans sa position de freinage de service et que ledit frein de parking (7) est dans sa configuration de repos.

2. Système selon la revendication 1, **caractérisé en ce qu'**il comporte au moins un dispositif de distribution pneumatique (55 ; 155 ; 255, 355) configuré pour être alimenté par ladite deuxième source d'agent de pression pneumatique (50, 51, 54, 58 ; 154 ; 254) et pour être connecté à ladite chambre de pression de frein de parking (25) afin de mettre ledit frein de parking (7) respectivement dans sa configuration de repos lorsqu'il est alimenté par ladite deuxième source d'agent de pression pneumatique (50, 51, 54, 58 ; 154 ; 254) et dans sa configuration de travail lorsqu'il n'est pas alimenté par ladite deuxième source d'agent de pression pneumatique (50, 51, 54, 58 ; 154 ; 254).

3. Système selon la revendication 2, **caractérisé en ce que** ledit au moins un dispositif de distribution pneumatique (55 ; 155 ; 255, 355) est configuré pour être connecté à ladite chambre de pression de frein de service (13) afin d'alimenter ledit frein de service (6) avec ladite deuxième source d'agent de pression pneumatique (50, 51, 54, 58 ; 154 ; 254).

4. Système selon l'une des revendications 2 et 3, **caractérisé en ce qu'**il comporte une valve de dérivation (56 ; 156 ; 256) configurée pour être connectée à ladite première source d'agent de pression pneumatique (50, 51, 53, 57 ; 153 ; 253), à ladite deuxième source d'agent de pression pneumatique (50, 51, 54, 58 ; 154 ; 254) et à ladite chambre de pression de frein de service (13) pour son alimentation.

5. Système selon la revendication 4, **caractérisé en ce que** ledit dispositif de distribution pneumatique (55 ; 155 ; 255, 355) est en communication fluidique avec ladite valve de dérivation (56 ; 156 ; 256) pour l'alimentation de ladite chambre de pression de frein de service (13).

6. Système selon l'une quelconque des revendications 2 à 5, **caractérisé en ce que** ledit dispositif de distribution pneumatique (155) est pourvu d'une valve de seuil (68) configurée pour contrôler et commander le passage d'un premier état dudit dispositif de distribution pneumatique (155) à un second état dudit dispositif de distribution pneumatique (155).

7. Système selon l'une quelconque des revendications 2 à 6, **caractérisé en ce que** ledit dispositif de distribution pneumatique est formé par un distributeur (55 ; 155) pourvu de quatre orifices et d'un tiroir (60 ; 160) à deux positions.

8. Système selon la revendication 7, **caractérisé en ce que** ledit tiroir (60 ; 160) à deux positions présente, dans une première position, une première entrée d'alimentation (61 b ; 161b) configurée pour être connectée à ladite deuxième source d'agent de pression pneumatique (50, 51, 54, 58 ; 154), une première sortie de frein de parking (61 c ; 161c) en communication fluidique avec ladite première entrée d'alimentation (61 b ; 161b) et configurée pour être connectée à ladite chambre de pression de frein de parking (25), une première sortie de frein de service (61 d ; 161 d) configurée pour être connectée à ladite chambre de pression de frein de service (13) et une première sortie d'échappement (61 a ; 161 a) en communication fluidique avec ladite première sortie de frein de service (61 d ; 161 d) et débouchant à l'atmosphère ; et dans une deuxième position, une deuxième entrée d'alimentation (62b; 162b) configurée pour être connectée à ladite deuxième source d'agent de pression pneumatique (50, 51, 54, 58 ; 154), une deuxième sortie de frein de service (62d ; 162d) en communication fluidique avec ladite deuxième entrée d'alimentation (62b ; 162b) et configurée pour être connectée à ladite chambre de pression de frein de service (13), une deuxième sortie de frein de parking (62c ; 162c) configurée pour être connectée à ladite chambre de pression de frein de parking (25) et une deuxième sortie d'échappement (62a ; 162a) en communication fluidique avec ladite deuxième sortie de frein de parking (62c ; 162c) et débouchant à l'atmosphère.

9. Système selon la revendication 8, **caractérisé en ce qu'**il comporte une valve de dérivation (56 ; 156) pourvue d'un premier orifice (65a ; 165a) configuré pour être connecté à ladite première source d'agent de pression pneumatique (50, 51, 53, 57 ; 153), d'un deuxième orifice (65b ; 165b) configuré pour être connecté, dans ladite première position dudit tiroir (60 ; 160), à ladite première sortie de frein de service (61 d ; 161 d), et dans ladite deuxième position dudit tiroir (60 ; 160), à ladite deuxième sortie de frein de service (62d ; 162d), et d'un troisième orifice (65c ; 165c) configuré pour être connecté à ladite chambre de pression de frein de service (13) ; avec ladite valve de dérivation (56 ; 156) qui comporte un clapet mobile (66 ; 166) configuré pour admettre une première position dans laquelle ledit premier orifice (65a ; 165a) est en communication fluidique avec ledit troisième orifice (65c ; 165c) et une deuxième position dans laquelle ledit deuxième orifice (65b ; 165b) est en communication fluidique avec ledit troisième orifice (65c ; 165c).

10. Système selon l'une quelconque des revendications 2 à 6, **caractérisé en ce que** ledit dispositif de distribution pneumatique est formé par un premier distributeur (255) et un second distributeur (355) pourvus chacun de trois orifices et d'un tiroir (260, 360) à deux positions.

11. Système selon la revendication 10, **caractérisé en ce que** ledit tiroir (260) dudit premier distributeur (255) présente, dans une première position, une première entrée d'alimentation (261 a) configurée pour être connectée à ladite deuxième source d'agent de pression pneumatique (254), une première sortie de frein de parking (261 b) en communication fluidique avec ladite première entrée d'alimentation (261 a) et configurée pour être connectée à ladite chambre de pression de frein de parking, et une première sortie bloquée de frein de service (261c) configurée pour être connectée à ladite chambre de pression de frein de service et pour bloquer le passage de l'air ; et dans une deuxième position, une deuxième entrée d'alimentation (262a) configurée pour être connectée à ladite deuxième source d'agent de pression pneumatique (254), une première sortie de frein de service (262c) en communication fluidique avec ladite deuxième entrée d'alimentation (262a) et configurée pour être connectée à ladite chambre de pression de frein de service, et une première sortie bloquée de frein de parking (262c) configurée pour être connectée à ladite chambre de pression de frein de parking et pour bloquer le passage de l'air ; tandis que ledit tiroir (360) dudit second distributeur (355) présente, dans une première position, une deuxième sortie de frein de service (361c) configurée pour être connectée à ladite chambre de pression de frein de service, une première sortie d'échappement (361 a) en communication fluidique avec ladite deuxième sortie de frein de service (361 a) et débouchant à l'atmosphère, et une deuxième sortie bloquée de frein de parking (361 b) configurée pour être connectée à ladite chambre de pression de frein de parking et pour bloquer le passage de l'air ; et dans une deuxième position, une deuxième sortie de frein de parking (362b) configurée pour être connectée à ladite chambre de pression de frein de parking, une deuxième sortie d'échappement (362a) en communication fluidique avec ladite deuxième sortie de frein de parking (361 b) et débouchant à l'atmosphère, et une deuxième sortie bloquée de frein de service (361c) configurée pour être connectée à ladite chambre de pression de frein de service et pour bloquer le passage de l'air.

12. Système selon la revendication 11, **caractérisé en ce qu'**il comporte une valve de dérivation (256) pourvue d'un premier orifice (265a) configuré pour être connecté à ladite première source d'agent de pression pneumatique (253), d'un deuxième orifice (265b) configuré pour être connecté, dans ladite première position desdits tiroirs (260, 360), à la fois à la première sortie bloquée de frein de service (261c) et à la deuxième sortie de frein de service (361 c), et dans ladite deuxième position desdits tiroirs (260, 360), à la fois à la première sortie de frein de service (262c) et à la deuxième sortie bloquée de frein de service (362c), et d'un troisième orifice (265c) configuré pour être connecté à ladite chambre de pression de frein de service ; avec ladite valve de dérivation (256) qui comporte un clapet mobile (266) configuré pour admettre une première position dans laquelle ledit premier orifice (265a) est en communication fluidique avec ledit troisième orifice (265c) et une deuxième position dans laquelle ledit deuxième orifice (265b) est en communication fluidique avec ledit troisième orifice (265c).

13. Système selon l'une quelconque des revendications 1 à 12, **caractérisé en ce que** ledit piston de freinage (8) est disposé dans ledit corps (2) et présente deux côtés, respectivement un premier côté (17) configuré pour agir sur ladite timonerie de freinage (4) et un second côté (18) opposé audit premier côté (17) et tourné vers la dite chambre de pression de frein de service (13), ainsi qu'une tige de piston (21) raccordée audit second côté (18) dudit piston de freinage (8) et disposée dans ladite chambre de pression de frein de service (13) ; ledit frein de parking (7) est disposé dans ledit corps (2), ledit dispositif de blocage est formé par un doigt de blocage (20) et ledit dispositif de commande est formé par un piston de maintien (23) mobile par rapport audit corps (2) et délimitant avec ledit corps (2) une chambre de pression de frein de parking (25) ainsi qu'un élément ressort (24) disposé dans ledit corps (2) et configuré pour agir sur ledit piston de maintien (23) ; avec ledit piston de maintien (23) qui est configuré pour maintenir ledit doigt de blocage (20) dans sa première position lorsque ladite chambre de pression de frein de parking (25) est alimentée et sous pression, première position dans laquelle ledit doigt de blocage (20) est à distance de ladite tige de piston (21) ; et avec ledit élément ressort (24) qui est configuré pour maintenir ledit doigt de blocage (21) dans sa seconde position lorsque ladite chambre de pression de frein de parking (25) est vidangée, deuxième position dans laquelle ledit doigt de blocage (20) immobilise ladite tige de piston (21).

14. Procédé de freinage d'un véhicule ferroviaire comportant un système de freinage ferroviaire (1) selon l'une quelconque des revendications 1 à 13, comportant :
- l'étape d'alimenter la chambre de pression de frein de parking (25) dudit système (1) avec une deuxième source d'agent de pression pneumatique (50, 51, 54, 58; 154; 254) pour déplacer le dispositif de commande (23, 24) dudit système (1) pour qu'il agisse sur le dispositif de blocage (20) dudit système (1) jusqu'à ce que ce dernier laisse libre le piston de freinage (8) dudit système (1), le frein de parking (7) dudit système (1) étant alors en configuration de repos ;
- l'étape d'alimenter la chambre de pression de frein de service (13) dudit système (1) avec une première source d'agent de pression pneumatique (50, 51, 53, 57 ; 153 ; 253) de sorte à mettre ledit piston de freinage (8) en position de freinage de service ;
- l'étape de commander la vidange de la chambre de pression de frein de parking (25) pour déplacer ledit dispositif de blocage (20) jusqu'à ce que ce dernier vienne immobiliser ledit piston de freinage (8) dans sa position de freinage de service, ledit frein de parking (7) étant alors en configuration de travail ;
- l'étape d'alimenter ladite chambre de pression de frein de service (13) avec ladite deuxième source d'agent de pression pneumatique (50, 51, 54, 58 ; 154 ; 254) de sorte à appliquer un effort supplémentaire sur la timonerie de freinage (4) dudit système (1) par l'intermédiaire dudit piston de freinage ; et
- l'étape de commander la vidange de ladite chambre de pression de frein de service (13).

15. Procédé selon la revendication 14, **caractérisé en ce que** ladite étape de commander la vidange de ladite chambre de pression de frein de parking (25) est déclenchée suite à la détection d'un seuil de pression prédéterminé et/ou ladite étape de commander la vidange de ladite chambre de pression de frein de service (13) se fait en laissant fuir ladite chambre de pression de frein de service (13).

## Patentansprüche

1. Schienenbremssystem für Schienenfahrzeuge mit Bremsen mit wenigstens einem Bremsbelag oder mit wenigstens einer Bremsklotzsohle (5), umfassend:
- einen Körper (2);
- ein Bremsgestänge (4), das dazu ausgebildet ist, auf wenigstens eine der Bremsen mit wenigstens einem Bremsbelag oder mit wenigstens einer Bremsklotzsohle (5) einzuwirken;
- eine Betriebsbremse (6) mit einem Bremskolben (8), der bezüglich des Körpers (2) beweglich ist, um auf das Bremsgestänge (4) einzuwirken, und mit dem Körper (2) einen Betriebsbremsendruckraum (13) umgrenzt, der dazu ausgebildet ist, durch eine erste pneumatische Druckmittelquelle (50, 51, 53, 57; 153; 253) gefüllt zu werden, um den Bremskolben (8) in eine Betriebsbremsstellung zu bringen; und
- eine Feststellbremse (7), die dazu ausgebildet ist, auf den Bremskolben (8) der Betriebsbremse (6) einzuwirken, und eine Arbeitskonfiguration und eine Ruhekonfiguration aufweist;
wobei das Schienenbremssystem (1) **dadurch gekennzeichnet ist, dass** die Feststellbremse (7) umfasst:
- eine Blockiervorrichtung (20), die bezüglich des Körpers (2) beweglich ist, um auf den Bremskolben (8) einzuwirken, und eine erste Stellung und eine zweite Stellung aufweist, in der die Blockiervorrichtung (20) dazu ausgebildet ist, den Bremskolben (8) in der Betriebsbremsstellung zu blockieren, wobei die Feststellbremse (7) sich dann in der Arbeitskonfiguration befindet;
- eine Betätigungsvorrichtung (23, 24), die bezüglich des Körpers (2) beweglich ist, mit dem Körper (2) einen Feststellbremsendruckraum (25) umgrenzt, der dazu ausgebildet ist, durch eine zweite pneumatische Druckmittelquelle (50, 51, 54, 58; 154; 254) gefüllt zu werden, und die eine stabile Stellung aufweist, in der die Betätigungsvorrichtung (23, 24) dazu ausgebildet ist, die Blockiervorrichtung in ihrer zweiten Stellung zu halten;
wobei das Schienenbremssystem (1) dazu ausgebildet ist, den Betriebsbremsendruckraum (13), wenn die Betätigungsvorrichtung (23, 24) sich in ihrer stabilen Stellung befindet, durch die zweite pneumatische Druckmittelquelle (50, 51, 54, 58; 154; 254) zu füllen, deren Druck höher ist als der der ersten pneumatischen Druckmittelquelle (50, 51, 53, 57; 153; 253), um, wenn die Feststellbremse (7) sich in der Arbeitskonfiguration befindet, eine Bremskraft auszuüben, die stärker ist als die Bremskraft, die ausgeübt wird, wenn der Bremskolben (8) sich in seiner Betriebsbremsstellung und die Feststellbremse (7) sich in ihrer Ruhekonfiguration befindet.

2. System nach Anspruch 1,
**dadurch gekennzeichnet, dass** es wenigstens eine pneumatische Verteilvorrichtung (55; 155; 255, 355) umfasst, die dazu ausgebildet ist, durch die zweite pneumatische Druckmittelquelle (50, 51, 54, 58; 154; 254) gespeist und mit dem Feststellbremsendruckraum (25) verbunden zu werden, um die Feststellbremse (7) in ihre Ruhekonfiguration, wenn sie durch die zweite pneumatische Druckmittelquelle (50, 51, 54, 58; 154; 254) gespeist wird, oder in ihre Arbeitskonfiguration zu versetzen, wenn sie nicht durch die zweite pneumatische Druckmittelquelle (50, 51, 54, 58; 154; 254) gespeist wird.

3. System nach Anspruch 2,
**dadurch gekennzeichnet, dass** die wenigstens eine pneumatische Verteilvorrichtung (55; 155; 255, 355) dazu ausgebildet ist, mit dem Betriebsbremsendruckraum (13) verbunden zu werden, um die Betriebsbremse (6) durch die zweite pneumatische Druckmittelquelle (50, 51, 54, 58; 154; 254) zu speisen.

4. System nach einem der Ansprüche 2 oder 3,
**dadurch gekennzeichnet, dass** es ein Bypassventil (56; 156; 256) aufweist, das dazu ausgebildet ist, mit der ersten pneumatischen Druckmittelquelle (50, 51, 53, 57; 153; 253), der zweiten pneumatischen Druckmittelquelle (50, 51, 54, 58; 154; 254) und dem Betriebsbremsendruckraum (13) zu dessen Füllung verbunden zu sein.

5. System nach Anspruch 4,
**dadurch gekennzeichnet, dass** die pneumatische Verteilvorrichtung (55; 155; 255, 355) zum Füllen des Betriebsbremsendruckraums (13) mit dem Bypassventil (56; 156; 256) fluidleitend verbunden ist.

6. System nach einem der Ansprüche 2 bis 5,
**dadurch gekennzeichnet, dass** die pneumatische Verteilvorrichtung (155) mit einem Schwellenventil (68) versehen ist, das dazu ausgebildet ist, den Wechsel von einem ersten Zustand der pneumatischen Verteilvorrichtung (155) in einen zweiten Zustand der pneumatischen Verteilvorrichtung (155) zu kontrollieren und zu steuern.

7. System nach der Ansprüche 2 bis 6,
**dadurch gekennzeichnet, dass** die pneumatische Verteilvorrichtung von einem Wegeventil (55; 155) gebildet ist, das mit vier Öffnungen und einem Zweistellungsschieber (60; 160) versehen ist.

8. System nach Anspruch 7,
**dadurch gekennzeichnet, dass** der Zweistellungsschieber (60; 160) in einer ersten Stellung einen ersten Zulaufeinlass (61b; 161 b), der dazu ausgebildet ist, mit der zweiten pneumatischen Druckmittelquelle (50, 51, 54, 58; 154) verbunden zu sein, einen ersten Feststellbremsenausgang (61 c; 161c), der fluidleitend mit dem ersten Zulaufeinlass (61b; 161 b) verbunden und dazu ausgebildet ist, mit dem Feststellbremsendruckraum (25) verbunden zu sein, einen ersten Betriebsbremsenausgang (61d; 161d), der dazu ausgebildet ist, mit dem Betriebsbremsendruckraum (13) verbunden zu sein, und einen ersten Auslass (61a; 161 a) aufweist, der fluidleitend mit dem ersten Betriebsbremsenausgang (61d; 161 d) verbunden ist und in die Atmosphäre mündet; und in einer zweiten Stellung einen zweiten Zulaufeinlass (62b; 162b), der dazu ausgebildet ist, mit der zweiten pneumatischen Druckmittelquelle (50, 51, 54, 58; 154) verbunden zu sein, einen zweiten Betriebsbremsenausgang (62d; 162d), der fluidleitend mit dem zweiten Zulaufeinlass (62b; 162b) verbunden und dazu ausgebildet ist, mit dem Betriebsbremsendruckraum (13) verbunden zu sein, einen zweiten Feststellbremsenausgang (62c; 162c), der dazu ausgebildet ist, mit dem Feststellbremsendruckraum (25) verbunden zu sein, und einen zweiten Auslass (62a; 162a) aufweist, der fluidleitend mit dem zweiten Feststellbremsenausgang (62c; 162c) verbunden ist und in die Atmosphäre mündet.

9. System nach Anspruch 8,
**dadurch gekennzeichnet, dass** es ein Bypassventil (56; 156) aufweist, das mit einer ersten Öffnung (65a; 165a), die dazu ausgebildet ist, mit der ersten pneumatischen Druckmittelquelle (50, 51, 53, 57; 153) verbunden zu sein, mit einer zweiten Öffnung (65b; 165b), die dazu ausgebildet ist, in der ersten Stellung des Schiebers (60; 160) mit dem ersten Betriebsbremsenausgang (61d; 161d) und in der zweiten Stellung des Schiebers (60; 160) mit dem zweiten Betriebsbremsenausgang (62d; 162d) verbunden zu sein, und mit einer dritten Öffnung (65c; 165c) versehen ist, die dazu ausgebildet ist, mit dem Betriebsbremsendruckraum (13) verbunden zu sein; wobei das Bypassventil (56; 156) eine bewegliche Klappe (66; 166) aufweist, die dazu ausgebildet ist, eine erste Stellung, in der die erste Öffnung (65a; 165a) fluidleitend mit der dritten Öffnung (65c; 165c) verbunden ist, und eine zweite Stellung aufzuweisen, in der die zweite Öffnung (65b; 165b) fluidleitend mit der dritten Öffnung (65c; 165c) verbunden ist.

10. System nach einem der Ansprüche 2 bis 6,
**dadurch gekennzeichnet, dass** die pneumatische Verteilvorrichtung von einem ersten Wegeventil (255) und einem zweiten Wegeventil (355) gebildet ist, die jeweils mit drei Öffnungen und einem Zweistellungsschieber (260, 360) versehen sind.

11. System nach Anspruch 10,
**dadurch gekennzeichnet, dass** der Schieber (260) des ersten Wegeventils (255) in einer ersten Stellung einen ersten Zulaufeinlass (261 a), der dazu ausgebildet ist, mit der zweiten pneumatischen Druckmittelquelle (254) verbunden zu sein, einen ersten Feststellbremsenausgang (261 b), der fluidleitend mit dem ersten Zulaufeinlass (261 a) verbunden und dazu ausgebildet ist, mit dem Feststellbremsendruckraum verbunden zu sein, und einen ersten blockierten Betriebsbremsenausgang (261 a) aufweist, der dazu ausgebildet ist, mit dem Betriebsbremsendruckraum verbunden zu sein und den Luftdurchlass zu blockieren; und in einer zweiten Stellung einen zweiten Zulaufeinlass (262a), der dazu ausgebildet ist, mit der zweiten pneumatischen Druckmittelquelle (254) verbunden zu sein, einen ersten Betriebsbremsenausgang (262c), der fluidleitend mit dem zweiten Zulaufeinlass (262a) verbunden und dazu ausgebildet ist, mit dem Betriebsbremsendruckraum verbunden zu sein, und einen ersten blockierten Feststellbremsenausgang (262c) aufweist, der dazu ausgebildet ist, mit dem Feststellbremsendruckraum verbunden zu sein und den Luftdurchlass zu blockieren; während der Schieber (360) des zweiten Wegeventils (355) in einer ersten Stellung einen zweiten Betriebsbremsenausgang (361 c), der dazu ausgebildet ist, mit dem Betriebsbremsendruckraum verbunden zu sein, einen ersten Auslass (361 a), der fluidleitend mit dem zweiten Betriebsbremsenausgang (361 a) verbunden ist und in die Atmosphäre mündet, und einen zweiten blockierten Feststellbremsenausgang (361 b) aufweist, der dazu ausgebildet ist, mit dem Feststellbremsendruckraum verbunden zu sein und den Luftdurchlass zu blockieren; und in einer zweiten Stellung einen zweiten Feststellbremsenausgang (362b), der dazu ausgebildet ist, mit dem Feststellbremsendruckraum verbunden zu sein, einen zweiten Auslass (362a), der fluidleitend mit dem zweiten Feststellbremsenausgang (361 b) verbunden ist und in die Atmosphäre mündet, und einen zweiten blockierten Betriebsbremsenausgang (361 c) aufweist, der dazu ausgebildet ist, mit dem Betriebsbremsendruckraum verbunden zu sein und den Luftdurchlass zu blockieren.

12. System nach Anspruch 11,
**dadurch gekennzeichnet, dass** es ein Bypassventil (256) aufweist, das mit einer ersten Öffnung (265a), die dazu ausgebildet ist, mit der ersten pneumatischen Druckmittelquelle (253) verbunden zu sein, mit einer zweiten Öffnung (265b), die dazu ausgebildet ist, in der ersten Stellung der Schieber (260, 360) sowohl mit dem ersten blockierten Betriebsbremsenausgang (261 c) als auch mit dem zweiten Betriebsbremsenausgang (361 c) verbunden zu sein, und in der zweiten Stellung der Schieber (260, 360) sowohl mit dem ersten Betriebsbremsenausgang (262c) als auch mit dem zweiten blockierten Betriebsbremsenausgang (362c) verbunden zu sein, und mit einer dritten Öffnung (265c) versehen ist, die dazu ausgebildet ist, mit dem Betriebsbremsendruckraum verbunden zu sein; wobei das Bypassventil (256) eine bewegliche Klappe (266) aufweist, die dazu ausgebildet ist, eine erste Stellung, in der die erste Öffnung (265a) fluidleitend mit der dritten Öffnung (265c) verbunden ist, und eine zweite Stellung aufzuweisen, in der die zweite Öffnung (265b) fluidleitend mit der dritten Öffnung (265c) verbunden ist.

13. System nach einem der Ansprüche 1 bis 12,
**dadurch gekennzeichnet, dass** der Bremskolben (8) in dem Körper (2) angeordnet ist und zwei Seiten aufweist, nämlich eine erste Seite (17), die dazu ausgebildet ist, auf das Bremsgestänge (4) einzuwirken, und eine zweite Seite (18), die der ersten Seite (17) entgegengesetzt angeordnet und dem Betriebsbremsendruckraum (13) zugewandt ist, sowie eine Kolbenstange (21), die mit der zweiten Seite (18) des Bremskolbens (8) verbunden und in dem Betriebsbremsendruckraum (13) angeordnet ist; die Feststellbremse (7) in dem Körper (2) angeordnet ist, die Blockiervorrichtung von einem Blockierzapfen (20) gebildet ist und die Betätigungsvorrichtung von einem Haltekolben (23), der bezüglich des Körpers (2) beweglich ist und mit dem Körper (2) einen Feststellbremsendruckraum (25) umgrenzt, sowie einem Federelement (24) gebildet ist, das in dem Körper (2) angeordnet und dazu ausgebildet ist, auf den Haltekolben (23) einzuwirken; wobei der Haltekolben (23) dazu ausgebildet ist, den Blockierzapfen (20), wenn der Feststellbremsendruckraum (25) gefüllt und druckbeaufschlagt ist, in seiner ersten Stellung zu halten, in der der Blockierzapfen (20) von der Kolbenstange (21) beabstandet ist; und wobei das Federelement (24) dazu ausgebildet ist, den Blockierzapfen (21), wenn der Feststellbremsendruckraum (25) entleert ist, in seiner zweiten Stellung zu halten, in der der Blockierzapfen (20) die Kolbenstange (21) blockiert.

14. Verfahren zum Bremsen eines Schienenfahrzeugs mit einem Schienenbremssystem (1) nach einem der Ansprüche 1 bis 13, umfassend:
- den Schritt zum Füllen des Feststellbremsendruckraums (25) des Systems (1) mit einer zweiten pneumatischen Druckmittelquelle (50, 51, 54, 58; 154; 254) zum Verschieben der Betätigungsvorrichtung (23, 24) des Systems (1), damit diese auf die Blockiervorrichtung (20) des Systems (1) so lange einwirkt, bis letztere den Bremskolben (8) des Systems (1) freigibt, wobei die Feststellbremse (7) des Systems (1) sich dann in der Ruhekonfiguration befindet;
- den Schritt zum Füllen des Betriebsbremsendruckraums (13) des Systems (1) mit einer ersten pneumatischen Druckmittelquelle (50, 51, 53, 57; 153; 253), derart, dass der Bremskolben (8) in die Betriebsbremsstellung gebracht wird;
- den Schritt zum Betätigen der Entleerung des Feststellbremsendruckraums (25), um die Blockiervorrichtung (20) so lange zu verschieben, bis letztere den Bremskolben (8) in seiner Betriebsbremsstellung blockiert, wobei die Feststellbremse (7) sich dann in der Arbeitskonfiguration befindet;
- den Schritt zum Füllen des Betriebsbremsendruckraums (13) mit der zweiten pneumatischen Druckmittelquelle (50, 51, 54, 58; 154; 254), derart, dass eine zusätzliche Kraft auf das Bremsgestänge (4) des Systems (1) mittels des Bremskolbens ausgeübt wird; und
- den Schritt zum Betätigen der Entleerung des Betriebsbremsendruckraums (13).

15. Verfahren nach Anspruch 14,
**dadurch gekennzeichnet, dass** der Schritt zum Betätigen der Entleerung des Feststellbremsendruckraums (25) durch Erkennen einer vorbestimmten Druckschwelle ausgelöst wird und/oder der Schritt zum Betätigen der Entleerung des Betriebsbremsendruckraums (13) durch Druckentweichen aus dem Betriebsbremsendruckraum (13) erfolgt.

## Claims

1. A rail vehicle braking system with brakes that have at least one lining or at least one block (5), comprising:
- a body (2);
- a braking linkage (4) configured to act on at least one said brake that has at least one lining or at least one block (5);
- a service brake (6) comprising a braking piston (8) which is movable relative to said body (2) to act on said braking linkage (4) and delimits with said body (2) a service brake pressure chamber (13) configured to be supplied by a first source of pneumatic pressure agent (50, 51, 53, 57 ; 153 ; 253) to put said braking piston (8) into a service braking position; and
- a parking brake (7) configured to act on said braking piston (8) of said service brake (6) and having a working configuration and a resting configuration;
said rail vehicle braking system (1) being **characterized in that** said parking brake (7) comprises:
- a blocking device (20) which is movable relative to said body (2) to act on said braking piston (8) and having a first position and a second position in which said blocking device (20) is configured to immobilize said braking piston (8) in service braking position, said parking brake (7) then being in working configuration;
- an actuating device (23, 24) movable relative to said body (2), delimiting with said body (2) a parking brake pressure chamber (25) configured to be supplied by a second source of pneumatic pressure agent (50, 51, 54, 58 ; 154 ; 254), and having a stable position in which said actuating device (23, 24) is configured to hold said blocking device in its second position;
said rail vehicle braking system (1) being configured such that, when said actuating device (23, 24) is in its stable position, said service brake pressure chamber (13) is supplied by said second source of pneumatic pressure agent (50, 51, 54, 58 ; 154 ; 254), of which the pressure is greater than that of said first source of pneumatic pressure agent (50, 51, 53, 57 ; 153 ; 253), in order to apply, when said parking brake (7) is in working configuration, a greater braking force than the braking force applied when said braking piston (8) is in its service braking position and said parking brake (7) is in its resting configuration.

2. A system according to claim 1, **characterized in that** it comprises at least one pneumatic distribution device (55 ; 155 ; 255, 355) configured to be supplied by said second source of pneumatic pressure agent (50, 51, 54, 58 ; 154 ; 254) and to be connected to said parking brake pressure chamber (25) in order to put said parking brake (7) respectively in its resting configuration when it is supplied by said second source of pneumatic pressure agent (50, 51, 54, 58 ; 154 ; 254) and in its working configuration when it is not supplied by said second source of pneumatic pressure agent (50, 51, 54, 58 ; 154 ; 254).

3. A system according to claim 2, **characterized in that** said at least one pneumatic distribution device (55 ; 155 ; 255, 355) is configured to be connected to said service brake pressure chamber (13) in order to supply said service brake (6) with said second source of pneumatic pressure agent (50, 51, 54, 58 ; 154 ; 254).

4. A system according to one of claims 2 and 3, **characterized in that** it comprises a diverting valve (56 ; 156 ; 256) configured to be connected to said first source of pneumatic pressure agent (50, 51, 53, 57 ; 153 ; 253), to said second source of pneumatic pressure agent (50, 51, 54, 58 ; 154 ; 254) and to said service brake pressure chamber (13) for its supply.

5. A system according to claim 4, **characterized in that** said pneumatic distribution device (55 ; 155 ; 255, 355) is in fluidic communication with said diverting valve (56 ; 156 ; 256) for the supply of said service brake pressure chamber (13).

6. A system according to any one of claims 2 to 5, **characterized in that** said pneumatic distribution device (155) is provided with a threshold valve (68) configured to control and actuate the passage from a first state of said pneumatic distribution device (155) to a second state of said pneumatic distribution device (155).

7. A system according to any one of claims 2 to 6, **characterized in that** said pneumatic distribution device is formed by a distributor (55 ; 155) provided with four apertures and a slide (60 ; 160) with two positions.

8. A system according to claim 7, **characterized in that** said slide (60 ; 160) with two positions has, in a first position, a first supply inlet (61 b ; 161 b) configured to be connected to said second source of pneumatic pressure agent (50, 51, 54, 58 ; 154), a first parking brake outlet (61 c ; 161c) in fluidic communication with said first supply inlet (61b; 161b) and configured to be connected to said parking brake pressure chamber (25), a first service brake outlet (61 d ; 161 d) configured to be connected to said service brake pressure chamber (13) and a first exhaust outlet (61 a ; 161 a) in fluidic communication with said first service brake outlet (61 d ; 161d) and opening to the atmosphere; and in a second position, a second supply inlet (62b; 162b) configured to be connected to said second source of pneumatic pressure agent (50, 51, 54, 58 ; 154), a second service brake outlet (62d ; 162d) in fluidic communication with said second supply inlet (62b; 162b) and configured to be connected to said service brake pressure chamber (13), a second parking brake outlet (62c ; 162c) configured to be connected to said parking brake pressure chamber (25) and a second exhaust outlet (62a; 162a) in fluidic communication with said second parking brake outlet (62c ; 162c) and opening to the atmosphere;

9. A system according to claim 8, **characterized in that** it comprises a diverting valve (56 ; 156) provided with a first aperture (65a ; 165a) configured to be connected to said first source of pneumatic pressure agent (50, 51, 53, 57 ; 153), a second aperture (65b ; 165b) configured to be connected, in said first position of said slide (60 ; 160), to said first service brake outlet (61 d ; 161d), and in said second position of said slide (60 ; 160), to said second service brake outlet (62d ; 162d), and a third aperture (65c; 165c) configured to be connected to said service brake pressure chamber (13); said diverting valve (56 ; 156) comprising a movable valve member (66 ; 166) configured to have a first position in which said first aperture (65a ; 165a) is in in fluidic communication with said third aperture (65c ; 165c) and a second position in which said second aperture (65b; 165b) is in fluidic communication with said third aperture (65c ; 165c).

10. A system according to any one of claims 2 to 6, **characterized in that** said pneumatic distribution device is formed by a first distributor (255) and by a second distributor (355) each provided with three apertures and with a slide (260, 360) having two positions;

11. A system according to claim 10, **characterized in that** said slide (260) of said first distributor (255) has, in a first position, a first supply inlet (261 a) configured to be connected to said second source of pneumatic pressure agent (254), a first parking brake outlet (261 b) in fluidic communication with said first supply inlet (261 a) and configured to be connected to said parking brake pressure chamber, and a blocked first service brake outlet (261 c) configured to be connected to said service brake pressure chamber and to block the passage of air; and in a second position, a second supply inlet (262a) configured to be connected to said second source of pneumatic pressure agent (254), a first service brake outlet (262c) in fluidic communication with said second supply inlet (262a) and configured to be connected to said service brake pressure chamber, and a blocked first parking brake outlet (262b) configured to be connected to said parking brake pressure chamber and to block the passage of air; whereas said slide (360) of said second distributor (355) has, in a first position, a second service brake outlet (361 c) configured to be connected to said service brake pressure chamber, a first exhaust outlet (361 a) in fluidic communication with said second service brake outlet (361 a) and opening to the atmosphere, and a blocked second parking brake outlet (361 b) configured to be connected to said parking brake pressure chamber and to block the passage of air; and in a second position, a second parking brake outlet (362b) configured to be connected to said parking brake pressure chamber, a second exhaust outlet (362a) in fluidic communication with said second parking brake outlet (361 b) and opening to the atmosphere, and a blocked second service brake outlet (361 c) configured to be connected to said service brake pressure chamber and to block the passage of air.

12. A system according to claim 11, **characterized in that** it comprises a diverting valve (256) provided with a first aperture (265a) configured to be connected to said first source of pneumatic pressure agent (253), a second aperture (265b) configured to be connected, in said first position of said slides (260, 360), to both the blocked first service brake outlet (261c) and to the second service brake outlet (361 c), and in said second position of said slides (260, 360), to both the first service brake outlet (262c) and to the blocked second service brake outlet (362c), and a third aperture (265c) configured to be connected to said service brake pressure chamber; said diverting valve (256) comprising a movable valve member (266) configured to have a first position in which said first aperture (265a) is in fluidic communication with said third aperture (265c) and a second position in which said second aperture (265b) is in fluidic communication with said third aperture (265c).

13. A system according to any one of claims 1 to 12, **characterized in that** said braking piston (8) is disposed in said body (2) and has two sides, respectively a first side (17) configured to act on said braking linkage (4) and a second side (18) which is an opposite side to said first side (17) and which is turned towards said service brake pressure chamber (13), as well as a piston rod (21) connected to said second side (18) of said braking piston (8) and disposed in said service brake pressure chamber (13); said parking brake (7) is disposed in said body (2), said blocking device is formed by a blocking finger (20) and said actuating device is formed by a holding piston (23) which is movable relative to said body (2) and which with said body (2) delimits a parking brake pressure chamber (25), as well as a spring member (24) disposed in said body (2) and configured to act on said holding piston (23); said holding piston (23) being configured to hold said blocking finger (20) in its first position when said parking brake pressure chamber (25) is supplied and under pressure, in which first position said blocking finger (20) is away from said piston rod (21); and said spring member (24) being configured to hold said blocking finger (21) in its second position when said parking brake pressure chamber (25) has been vented, in which second position said blocking finger (20) immobilizes said piston rod (21).

14. A method of braking a rail vehicle comprising a rail vehicle braking system (1) according to any one of claims 1 to 13, comprising:
- the step of supplying the parking brake pressure chamber (25) of said system (1) with a second source of pneumatic pressure agent (50, 51, 54, 58 ; 154 ; 254) to move the actuating device (23, 24) of said system (1) in order for it to act on the blocking device (20) of said system (1) until the latter leaves free the braking piston (8) of said system (1), the parking brake (7) of said system (1) then being in resting configuration;
- the step of supplying the service brake pressure chamber (13) of said system (1) with a first source of pneumatic pressure agent (50, 51, 53, 57 ; 153 ; 253) so as to put said braking piston (8) in service braking position;
- the step of actuating the venting of the parking brake pressure chamber (25) to move said blocking device (20) until the latter comes to immobilize said braking piston (8) in its service braking position, said parking brake (7) then being in working configuration;
- the step of supplying said service brake pressure chamber (13) with said second source of pneumatic pressure agent (50, 51, 54, 58 ; 154 ; 254) so as to apply an additional force on the braking linkage (4) of said system (1) via said braking piston; and;
- the step of actuating the venting of said service brake pressure chamber (13).

15. A method according to claim 14, **characterized in that** said step of actuating the venting of said parking brake pressure chamber (25) is triggered further to detecting a predetermined pressure threshold and/or said step of actuating the venting of said service brake pressure chamber (13) is carried out by allowing said service brake pressure chamber to leak (13).
